(19) Europäisches Patentamt
European Patent Office
Office européen des brevets

(11) **EP 3 607 392 B1**

(12) **EUROPÄISCHE PATENTSCHRIFT**

(45) Veröffentlichungstag und Bekanntmachung des Hinweises auf die Patenterteilung:
**01.05.2024 Patentblatt 2024/18**

(21) Anmeldenummer: **18714467.0**

(22) Anmeldetag: **21.03.2018**

(51) Internationale Patentklassifikation (IPC):
**G02C 11/04** (2006.01)    **G02C 11/00** (2006.01)
**H02J 50/30** (2016.01)    **A61B 3/00** (2006.01)
**A61F 2/16** (2006.01)

(52) Gemeinsame Patentklassifikation (CPC):
**G02C 11/04; G02C 11/10; H02J 50/30**

(86) Internationale Anmeldenummer:
**PCT/EP2018/057107**

(87) Internationale Veröffentlichungsnummer:
**WO 2018/184837 (11.10.2018 Gazette 2018/41)**

(54) **VORRICHTUNG ZUR ENERGIEVERSORGUNG VON UND/ODER KOMMUNIKATION MIT EINEM AUGENIMPLANTAT MITTELS BELEUCHTUNGSSTRAHLUNG**

APPARATUS FOR SUPPLYING ENERGY TO AND/OR COMMUNICATING WITH AN EYE IMPLANT BY MEANS OF ILLUMINATION RADIATION

DISPOSITIF POUR L'APPROVISIONNEMENT ÉNERGÉTIQUE DE ET/OU LA COMMUNICATION AVEC UN IMPLANT OCULAIRE AU MOYEN D'UN FAISCEAU D'ÉCLAIRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.04.2017 DE 102017107346**

(43) Veröffentlichungstag der Anmeldung:
**12.02.2020 Patentblatt 2020/07**

(73) Patentinhaber: **Carl Zeiss AG**
**73447 Oberkochen (DE)**

(72) Erfinder:
• **NOBIS, Thomas**
**04315 Leipzig (DE)**
• **SCHMITT-MANDERBACH, Tobias**
**87435 Kempten (DE)**
• **BUBLITZ, Daniel**
**07646 Rausdorf (DE)**

(74) Vertreter: **Patentanwälte Geyer, Fehners & Partner mbB**
**Perhamerstrasse 31**
**80687 München (DE)**

(56) Entgegenhaltungen:
**WO-A1-2015/110933    WO-A1-2017/144421**
**WO-A2-2005/026786    WO-A2-2015/101932**

**Beschreibung**

Die vorliegende Erfindung betrifft eine Vorrichtung zur Energieversorgung und/oder Kommunikation mit einem Augenimplantat mittels Beleuchtungsstrahlung.

Die Entwicklung von biokompatibler Elektronik bzw. biokompatibel verkapselter Elektronik sowie der generelle Fortschritt der Bionik haben zu einer Reihe neuer Sensoren und Aktoren geführt, die, in der Regel aus medizinischen Gründen, im Körper implantiert werden. Aufgrund der fortschreitenden Miniaturisierung der elektronischen Komponenten ist nunmehr sogar die chirurgische Implantation in das menschliche Auge möglich.

Je nach Anwendungsgebiet können solche Implantate im Bereich der Hornhaut (z.B. elektronische Kontaktlinse), in der Vorderkammer oder in der Nähe der Linse bzw. Iris (z.B. Intraokularlinse, mechanische Iris, Vorderkammersensoren), im Glaskörper sowie auf der Netzhaut (z.B. Retina-Implantat zur Wiederherstellung des Sehsinns) eingebracht werden.

Für den Betrieb solcher elektronischer Bauteile wird in der Regel eine stabile Versorgung mit Energie benötigt. Wegen des komplizierten chirurgischen Eingriffs kommt die Verwendung einer Batterie oder deren regelmäßiger Wechsel nicht in Frage. Vielmehr wird die Energieversorgung üblicherweise über induktive Verfahren durchführt. Hierfür werden im Körper in der Nähe des eigentlichen Implantats zusätzliche Leiterschleifen eingebracht. Dies ist jedoch insbesondere für augennahe elektronische Bauteile chirurgisch aufwendig und erhöht das Risiko medizinischer Komplikationen.

Eine alternative Möglichkeit bietet die Beleuchtung des Implantats mit Licht. Bevorzugt wird hierfür Licht außerhalb des sichtbaren Spektralbereichs verwendet, z.B. infrarotes oder ultraviolettes Licht. Für das menschliche Auge und/oder die normale Funktion des Implantats ist dieses bereitgestellte Licht in der Regel nicht störend. Die mit dem Beleuchtungslicht übertragene Leistung lässt sich somit als Energiequelle nutzen, falls das Implantat über entsprechende sensitive Empfänger (Solarzellen) verfügt.

Ein weiterer Anwendungsfall besteht darin, diesen Übertragungsweg zur Kommunikation mit dem Implantat zu verwenden. In diesem Fall benötigt das Implantat ebenfalls Empfänger (Fotodioden) und gegebenenfalls Sender (Lichtquellen). Die übertragende Energie steht hier im Hintergrund. Ziel ist die Übertragung von Informationen. Dies geschieht beispielsweise durch Modulation der Intensität oder Frequenz der übertragenen Strahlung.

Bei Implantaten auf der Netzhaut besteht die zusätzliche Schwierigkeit, dass die Abbildungseigenschaften der Augenbestandteile eine Auswirkung haben.

Die WO 2015/101932 A2 zeigt eine Vorrichtung, mit der ein Implantat auf der Netzhaut mit Energie versorgt werden kann. Die WO 2005/026786 A2 und die nachveröffentlichte WO 2017/144421 A1 zeigen jeweils eine Vorrichtung mit den Merkmalen des Oberbegriffs des Anspruches 1.

In der US 9,474,902 B2 wird ein Beleuchtungssystem für den Fall eines Retina-Implantats zur teilweisen Wiederherstellung der Sehkraft beschrieben. Dort wird eine kohärente Punktlichtquelle über eine Kollimator und Lichtleiter ins Innere eines Brillenglases abgebildet und fokussiert. Die dann divergente Strahlung, die aus dem Brillenglas austritt, beleuchtet die Augenpupille und erzeugt auf der Retina einen für den Anwendungsfall hinreichend großen beleuchteten kreisförmigen Fleck.

Bei geringfügiger Verdrehung des Auges um wenige Grad wird jedoch das bereitgestellte Licht an der Augenpupille vignettiert und gelangt nicht mehr bis zur Retina. Auch bei einer leichten seitlichen Verschiebung des Auges um z.B. 1 mm verschiebt sich der beleuchtete Bereich auf der Retina, so dass Teile des Implantats nicht mehr beleuchtet werden.

Ausgehend hiervon soll eine verbesserte Vorrichtung zur Energieversorgung von und/oder Kommunikation mit einem Augenimplantat mittels Beleuchtungsstrahlung bereitgestellt werden.

Die Erfindung ist im Anspruch 1 definiert. Vorteilhafte Weiterbildungen sind in den abhängigen Ansprüchen angegeben.

Mit der erfindungsgemäßen Vorrichtung wird in vorteilhafter Weise eine Robustheit gegenüber lateralem Versatz des Auges des Benutzers zur Beleuchtungsoptik sowie gegenüber axialem Versatz des Auges zur Beleuchtungsoptik erreicht. Ein solcher Versatz kann beispielsweise auftreten, wenn die Vorrichtung relativ zum Benutzer etwas verrutscht oder wenn die Vorrichtung für verschiedene Benutzer ausgelegt ist.

Auch kann eine Robustheit gegenüber Variationen der Größe der Augenpupille und gegenüber Variationen des Drehwinkels des Auges in der Augenhöhle erzielt werden.

Des Weiteren liegt eine hohe Effizienz der zur Verfügung gestellten Beleuchtungsstrahlung vor. Es wird vorteilhaft möglichst eine ausschließliche Beleuchtung des Implantats bzw. des Bereiches des Implantats, das beleuchtet werden muss, mit nur wenig Überstrahlung erreicht. Ferner kann ein homogenes Beleuchtungsmuster bzw. an die Empfängergeometrie ein angepasstes Muster bereitgestellt werden. Auch wird ein Unterschreiten sicherheitsrelevanter Grenzwerte der Strahlungsstärke der einzelnen Partien des menschlichen Auges gewährleistet.

Unter der lateralen Ausdehnung des Fokus von mindestens 0,5 mm in Luft wird hier insbesondere die Ausdehnung verstanden, die ohne die Abbildungseigenschaften des Auges vorliegt. Natürlich kann Ausdehnung des Fokus im Auge durch die Abbildungseigenschaften des Auges verändert sein.

Die laterale Ausdehnung kann $\geq 0{,}6$ mm, $\geq 0{,}7$ mm, $\geq 0{,}8$ mm, $\geq 0{,}9$ mm, $\geq 1{,}0$ mm bis $\geq 3$ mm (in z.B. 0,1 mm Schritten) betragen. Ferner kann die laterale Ausdehnung $\leq 6$ mm bis $= 0{,}5$ mm (in z.B. 0,1 mm Schritten) betragen.

Auch die angegebenen Fokuspositionen sind bevorzugt als Fokuspositionen zu verstehen, die vorliegen, wenn die Abbildungseigenschaften des Auges nicht berücksichtigt werden. Es wird somit bevorzugt eine gedachte Lage des Fokus beschrieben, die sich aus den Schnittpunkten von gedachten Verlängerung der Strahlen des Strahlenbündels ergibt. Da bei dieser Betrachtung die Abbildungseigenschaften des Auges nicht berücksichtigt werden, kann man auch von der Fokusposition in Luft sprechen.

Die angegebenen Fokuspositionen müssen bevorzugt nicht exakt vorliegen. Es können z.B. Abweichungen (z.B. in Ausbreitungsrichtung des Strahlenbündels) im Bereich von ± 0,5 mm, ± 1 mm, ± 1,5 mm ± 2 mm, ± 2,5 mm, ± 3 mm, ± 3,5 mm oder ± 4 mm in Luft oder im Auge vorliegen.

Die Beleuchtungsoptik kann ein Optikelement mit streuender Wirkung zur Erzeugung der lateralen Ausdehnung des Fokus aufweisen. Das Optikelement mit streuender Wirkung kann eine Streuscheibe und/oder ein Hologramm (z.B. ein Volumenhologramm) aufweisen. Ferner kann das Optikelement mit streuender Wirkung so ausgebildet sein, dass die streuende

Wirkung nur für die Wellenlänge der Beleuchtungsstrahlung vorliegt und dass keine streuende Wirkung für Licht aus dem sichtbaren Wellenlängenbereich vorliegt. So kann das Optikelement mit streuender Wirkung z.B. im normalen Sichtbereich des Benutzers positioniert sein, da es für den Benutzer nicht sichtbar ist.

Ferner kann das Optikelement mit streuender Wirkung näher an einem Austrittsbereich oder einer Austrittsfläche des Beleuchtungsoptik (hierunter wird insbesondere die letzte optische Fläche der Beleuchtungsoptik verstanden, die die Beleuchtungsstrahlung beeinflusst, bevor sie in das Auge eintritt) positioniert sein als an der optischen Eingangsschnittstelle. Insbesondere ist das Optikelement mit streuender Wirkung auf der Austrittsfläche ausgebildet oder das letzte optische Element vor der Austrittsfläche.

Die erfindungsgemäße Vorrichtung kann als eigenständiges optisches Gerät ausgebildet sein. Insbesondere kann es als separates Gerät ausgebildet sein, vor dem sich der Benutzer entsprechend positioniert. Beispielsweise kann sich der Benutzer vor das Gerät setzen und die Stirn an eine Anlagefläche der Positioniereinheit legen und dann in das Gerät blicken, wie dies bei Behandlungsgeräten beim Augenarzt üblich ist. Auch kann die Vorrichtung so ausgebildet sein, dass die Positioniereinheit eine auf den Kopf eines Benutzers aufsetzbare Haltevorrichtung umfasst. Dabei kann es sich um eine brillenartige Haltevorrichtung, einen Helm, oder eine sonstige auf den Kopf aufsetzbare Vorrichtung handeln.

Die Beleuchtungsstrahlung kann insbesondere eine Wellenlänge außerhalb dem sichtbaren Wellenlängenbereich (unter dem hier der Wellenlängenbereich von 400 bis 780 nm verstanden wird) aufweisen. Insbesondere kann die Beleuchtungsstrahlung im Infrarotbereich liegen (beispielsweise im Bereich von 780 nm bis 50 $\mu$m oder 780 nm bis 3 $\mu$m). Auch kann die Beleuchtungsstrahlung im UV-Bereich liegen und somit beispielsweise eine Wellenlänge von kleiner als 400 nm und insbesondere eine Wellenlänge aus dem Bereich von 200 bis 400 nm, oder 250 bis 400nm oder 300 bis 400 nm aufweisen.

Der Wellenlängenbereich der beleuchteten Strahlung kann relativ schmalbandig sein. Insbesondere kann die Bandbreite $\leq$ 100 nm, $\leq$ 50 nm oder $\leq$ 10 nm sein. Ferner kann die Bandbreite mindestens 1 nm, 5 nm oder 10 nm betragen. Wenn eine schmalbandige Beleuchtungsstrahlung vorliegt, kann sie auch aus dem sichtbaren Wellenlängenbereich sein.

Es wird ferner eine Vorrichtung zur Energieversorgung von und/oder Kommunikation mit einem Augenimplantat mittels Beleuchtungsstrahlung bereitgestellt, wobei die Vorrichtung eine Positioniereinheit, die eine Beleuchtungsposition des Auges eines Benutzers festlegt, eine optische Eingangsschnittstelle, über die die Beleuchtungsstrahlung der Vorrichtung zuführbar ist, und eine Beleuchtungsoptik aufweist, wobei die Beleuchtungsoptik die zugeführte Beleuchtungsstrahlung so fokussiert, dass, wenn das Auge des Benutzers in der festgelegten Beleuchtungsposition ist, ein virtueller Fokus vor dem Auge vorliegt und die Beleuchtungsstrahlung als divergierendes Strahlenbündel in das Auge eintritt.

Insbesondere kann die Beleuchtungsoptik so ausgebildet sein, dass der virtuelle Fokus eine laterale Ausdehnung von mindestens 0,1 mm aufweist.

Die laterale Ausdehnung kann $\geq$ 0,2 mm, $\geq$ 0,3 mm, $\geq$ 0,4 mm, $\geq$ 0,5 mm, $\geq$ 0,6 mm, $\geq$ 0,7 mm, $\geq$ 0,8 mm, $\geq$ 0,9 mm, $\geq$ 1,0 mm bis $\geq$ 3 mm (in z.B. 0,1 mm Schritten) betragen. Ferner kann die laterale Ausdehnung $\leq$ 6 mm bis $\leq$ 0,5 mm (in z.B. 0,1 mm Schritten) betragen.

Wenn die Vorrichtung als auf dem Kopf tragbare Vorrichtung mit einem Brillenglas ausgebildet ist, kann der virtuelle Fokus bevorzugt vor der dem Kopf abgewandten Seite (Vorderseite) des Brillenglases liegen.

Die Vorrichtung mit der Beleuchtungsoptik, die den virtuellen Fokus vor dem Auge erzeugt, kann in gleicher Weise weitergebildet werden wie die bereits beschriebene Vorrichtung mit der Beleuchtungsoptik, die den Fokus im Auge erzeugt.

Nachfolgend wird die Erfindung beispielsweise anhand der beigefügten Zeichnungen, die auch erfindungswesentliche Merkmale offenbaren, noch näher erläutert. Es zeigen:

Fig. 1        eine schematische perspektivische Darstellung einer Ausführungsform der erfindungsgemäßen Beleuchtungsvorrichtung;

Fig. 2        eine Teilschnittansicht der wesentlichen optischen Komponenten zur Erläuterung der Beleuchtung des Implantats 2 mit Beleuchtungsstrahlung;

| Fig. 3 | eine Schnittansicht einer weiteren Ausführungsform der Beleuchtungsoptik; |
| Fig. 4 | eine Schnittansicht einer weiteren Ausführungsform der Beleuchtungsoptik; |
| Fig. 5 | eine Schnittansicht einer weiteren Ausführungsform der Beleuchtungsoptik; |
| Fig. 6 | eine Schnittansicht einer weiteren Ausführungsform der Beleuchtungsoptik; |
| Fig. 7 | eine Schnittansicht einer weiteren Ausführungsform der Beleuchtungsoptik; |
| Fig. 8 | eine Schnittansicht einer weiteren Ausführungsform der Beleuchtungsoptik; |
| Fig. 9A und 9B | x- und y-Schnitte der Beleuchtungsoptik in einer weiteren Ausführungsform; |
| Fig. 10A und 10B | x- und y-Schnitte der Beleuchtungsoptik gemäß einer weiteren Ausführungsform; |
| Fig. 11 | eine Schnittansicht einer weiteren Ausführungsform der Beleuchtungsoptik; |
| Fig. 12 | eine Draufsicht der Beleuchtungsoptik von Fig. 11; |
| Fig. 13 und 14 | Darstellungen zur Erläuterung der Fresnel-Struktur; |
| Fig. 15 | eine schematische Darstellung zur Erläuterung der Kollimation der Beleuchtungsstrahlung; |
| Fig. 16 | eine schematische Darstellung zur Erzeugung einer ausgedehnten Lichtquelle; |
| Fig. 17 | eine schematische Darstellung einer weiteren Variante zur Erzeugung einer ausgedehnten Lichtquelle; |
| Fig. 18 | eine Schnittdarstellung einer nicht erfindungsgemäßen Beleuchtungsoptik; |
| Fig. 19 | eine Schnittdarstellung einer weiteren Ausführungsform der Beleuchtungsoptik; |
| Fig. 20 | eine Schnittdarstellung einer weiteren Ausführungsform der Beleuchtungsoptik; |
| Fig. 21 | eine Schnittdarstellung einer weiteren Ausführungsform der Beleuchtungsoptik; |
| Fig. 22 | eine Schnittdarstellung einer weiteren Ausführungsform der Beleuchtungsoptik; |
| Fig. 23 | eine Schnittdarstellung einer weiteren Ausführungsform der Beleuchtungsoptik; |
| Fig. 24 | eine Schnittdarstellung einer weiteren Ausführungsform der Beleuchtungsoptik; |
| Fig. 25 | eine schematische Darstellung der Beleuchtungsoptik gemäß einer weiteren Ausführungsform; |
| Fig. 26 | eine schematische Darstellung der Beleuchtungsoptik gemäß einer weiteren Ausführungsform; |
| Fig. 27A-D | verschiedene Drehstellungen des Auges bei der Beleuchtungsoptik gemäß Fig. 26; |
| Fig. 28 | eine schematische Darstellung der Beleuchtungsoptik gemäß einer weiteren Ausführungsform; |
| Fig. 29A-E | verschiedene Stellungen (laterale Positionen und/oder Drehstellungen) des Auges für die Beleuchtungsoptik gemäß Fig. 28; |
| Fig. 30 | eine schematische Darstellung der Beleuchtungsoptik gemäß einer weiteren Ausführungsform; |
| Fig. 31A-D | verschiedene Stellungen (laterale Positionen und/oder Drehstellungen) des Auges bei einer Beleuchtungsoptik gemäß Fig. 30; |
| Fig. 32 | eine schematische Darstellung der |

Beleuchtungsoptik gemäß einer weiteren Ausführungsform;

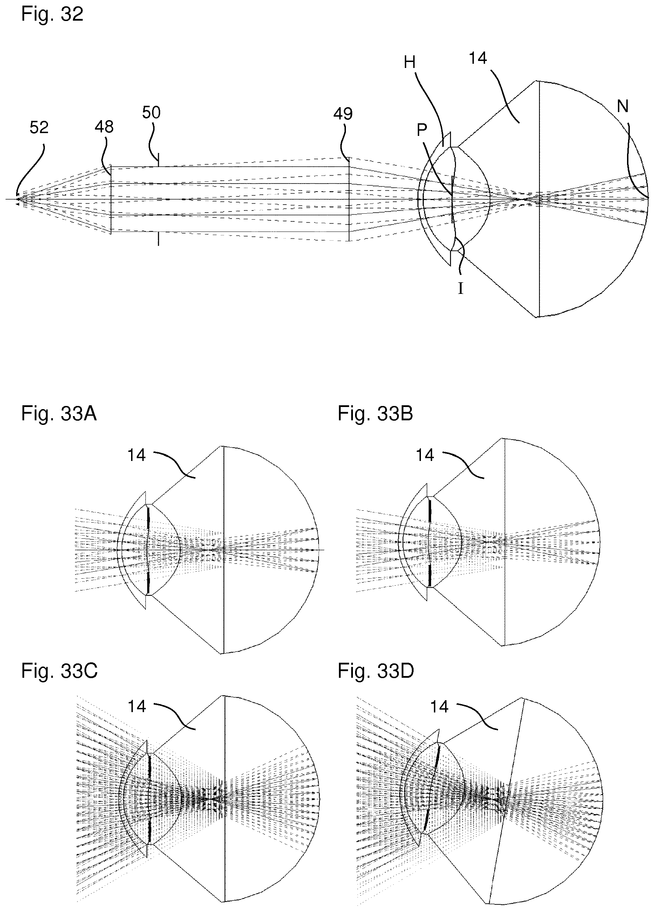

Fig. 33A-D    verschiedene Stellungen des Auges bei einer Beleuchtungsoptik gemäß Fig. 32;

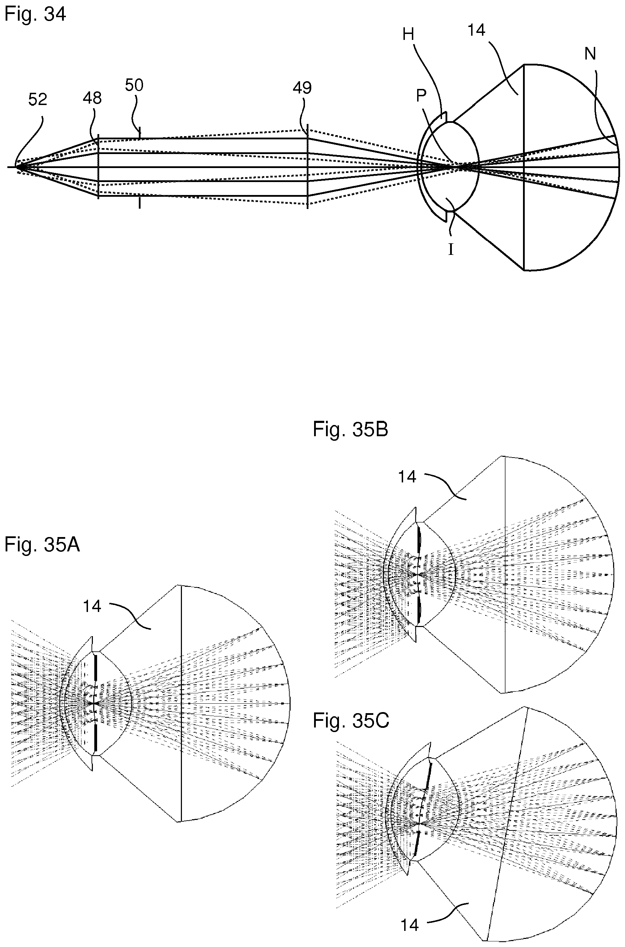

Fig. 34    eine schematische Darstellung der Beleuchtungsoptik gemäß einer weiteren Ausführungsform;

Fig. 35A-C    verschiedene Stellungen (laterale Positionen und/oder Drehstellungen) des Auges bei einer Beleuchtungsoptik gemäß Fig. 34;

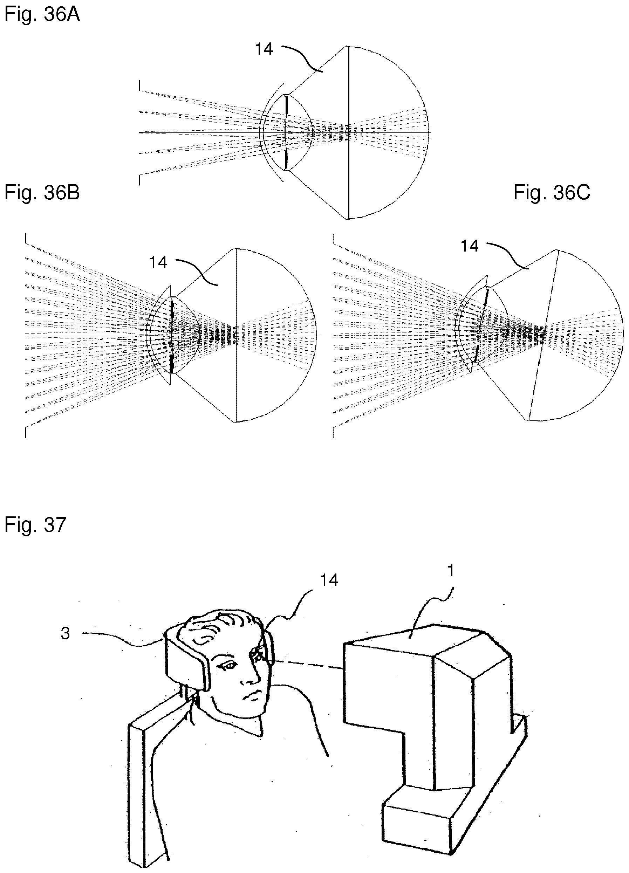

Fig. 36A-C    verschiedene Stellungen des Auges bei einer weiteren Ausführungsform der Beleuchtungsoptik, und

Fig. 37    eine Variante der erfindungsgemäßen Beleuchtungsvorrichtung.

Nachfolgend werden verschiedene Ausführungsbeispiele detailliert erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente oder Komponenten, weniger Elemente oder Komponenten oder zusätzliche Elemente oder Komponenten enthalten. Elemente oder Komponenten verschiedener Ausführungsbeispiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein.

Zur Vermeidung von Wiederholungen werden gleiche oder einander entsprechende Elemente in verschiedenen Figuren mit den gleichen Bezugszeichen bezeichnet und werden nicht mehrmals erläutert.

Bei den folgenden Ausführungsbeispielen wird ein Retina-Implantat als Beispiel verwendet. Die beschriebenen Techniken sind jedoch auch auf andere Augenimplantate, beispielsweise die eingangs erwähnten Augenimplantate anwendbar.

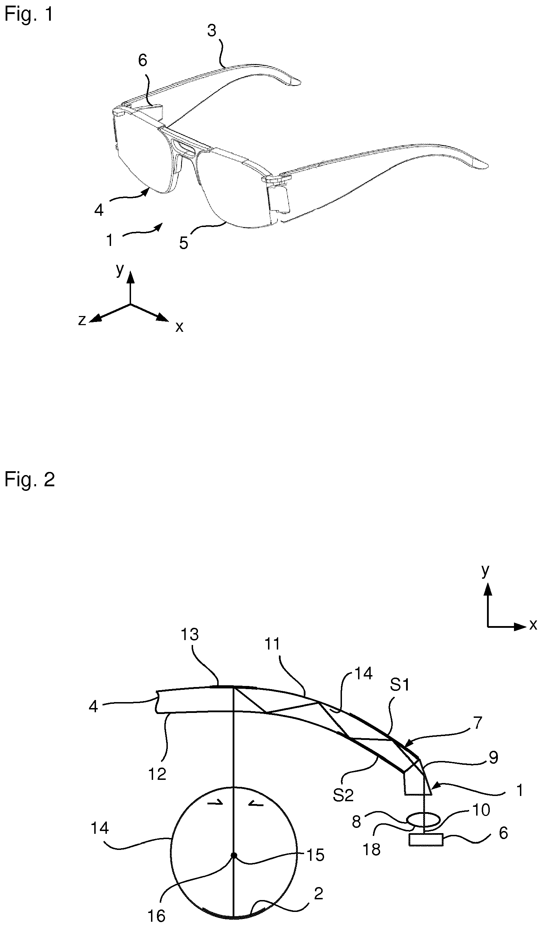

Bei der in Fig. 1 und 2 gezeigten Ausführungsform umfasst die erfindungsgemäße Beleuchtungsvorrichtung 1 zur Energieversorgung eines Augenimplantats 2 (z.B. ein Netzhautimplantat 2) eine auf den Kopf eines Benutzers aufsetzbare Haltevorrichtung 3, die z.B. in Art eines herkömmlichen Brillengestells ausgebildet sein kann, sowie ein erstes und ein zweites Brillenglas 4, 5, die an der Haltevorrichtung 3 befestigt sind.

Die Beleuchtungsvorrichtung 1 umfasst ferner eine Lichtquelle 6, die im Bereich des rechten Brillenbügels an der Haltevorrichtung 3 angeordnet sein kann, wie in Fig. 1 schematisch dargestellt ist. Die Lichtquelle 6 gibt Beleuchtungsstrahlung im Infrarotbereich ab und kann z.B. als LED oder als Laser ausgebildet sein.

Ferner umfasst die Beleuchtungsvorrichtung 1 eine Beleuchtungsoptik 7, die eine Kollimationsoptik 8, ein Umlenkprisma 9 und das erste Brillenglas 4 aufweist.

Die Lichtquelle 6 gibt ein divergierendes Strahlenbündel 10 im Infrarotbereich ab, das von der Kollimationsoptik 8 in ein nahezu paralleles Strahlenbündel umgeformt wird. Das parallele Strahlenbündel 10 wird mittels des Umlenkprismas 9 in das erste Brillenglas 4 eingekoppelt, in dem es mittels interner Totalreflexion an der Vorderseite und Rückseite 11, 12 des ersten Brillenglases 4 bis zu einem Auskoppelhologramm 13, das an der Vorderseite 11 ausgebildet ist, geführt wird. In Fig. 1 ist zur Vereinfachung der Darstellung für das Strahlenbündel 10 nur ein Lichtstrahl 10 eingezeichnet. Das Auskoppelhologramm 13 lenkt das Strahlenbündel 10 in Richtung zur Rückseite 12 so um, dass das Strahlenbündel 10 über die Rückseite 12 austritt und auf das Auge 14 eines die Beleuchtungsvorrichtung 1 auf dem Kopf tragenden Benutzers trifft.

Die Beleuchtungsoptik 7 und insbesondere das Auskoppelhologramm 13 bewirken eine Fokussierung des Strahlenbündels 10 in der Art, dass das Strahlenbündel 10 als konvergierendes Strahlenbündel 10 auf das Auge 14 trifft bzw. in das Auge 14 eintritt. Der Fokus 16 des Strahlenbündels 10 liegt innerhalb des Auges 14 und bei der hier beschriebenen Ausführungsform im Drehpunkt 15 des Auges (ohne Berücksichtigung der Brechkraft des Auges 14 und somit quasi in Luft). Die tatsächliche Lage des Fokus 16 wird hierbei noch durch die Abbildungseigenschaften des Auges 14 verändert. Es wird jedoch bevorzugt die gedachte Lage des Fokus 16 beschrieben, die sich aus den Schnittpunkten der gedachten Verlängerung der Strahlen des Strahlenbündels 10 ergibt. Bei dieser Betrachtung werden daher die Abbildungseigenschaften des Auges 14 nicht berücksichtigt, so dass man auch von der Fokusposition in Luft sprechen kann.

Die Beleuchtungsoptik 7 ist so ausgelegt, dass der Fokus 16 ein räumlich ausgedehnter Fokusfleck 16 ist, der eine laterale Ausdehnung (hierunter wird insbesondere die Ausdehnung quer zur Ausbreitungsrichtung des Strahlenbündels und somit in einer Ebene senkrecht zur Zeichenebene in Fig. 2, die die x-Achse gemäß Fig. 2 enthält, verstanden) von mindestens 0,1 mm aufweist. Diese Mindestgröße des Fokus 16 kann z.B. durch eine durch das Auskoppelhologramm 13 bewirkte Streufunktion erreicht werden. Die angegebene Mindestgröße des Fokus 16 bezieht sich wiederum auf die Größe des Fokus in Luft (also ohne Berücksichtigung der Brechkraft des Auges 14).

Der Fokus 16 muss nicht genau im Drehpunkt 15 liegen. Er kann in Ausbreitungsrichtung des Strahlenbündels 10 (und hier somit in y-Richtung) in einem Bereich von ± 5 mm, ± 4 mm, ± 3 mm, ± 2 mm oder ± 1 mm um den Drehpunkt 15 liegen.

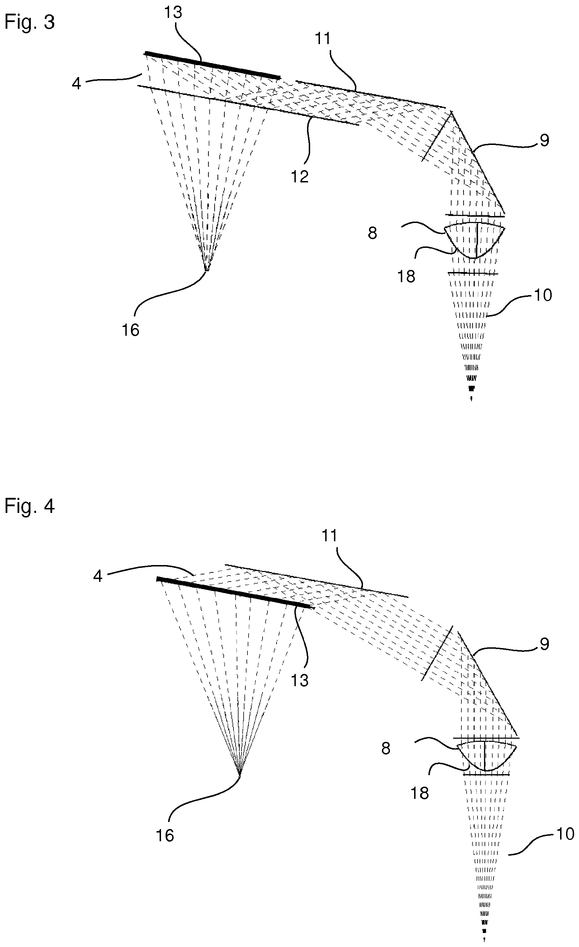

In Fig. 3 ist in einer ähnlichen Darstellung zur Fig. 2 das gesamte Strahlenbündel 10 dargestellt, so dass klar ersichtlich ist, wie das divergierende Strahlenbündel 10 mittels der Kollimationsoptik 8 in ein kollimiertes Strahlenbündel 10 umgewandelt wird, dass dann über das Umlenkprisma 9 in das Brillenglas 4 eingekoppelt und in diesem bis zum Auskoppelhologramm 13 geführt wird, so dass aufgrund der Reflexion am Auskoppelhologramm 13 der beschriebene Fokus 16 erzeugt wird. Bei der Darstellung in Fig. 3 ist die Vorderseite 11 und Rückseite 12 des Brillenglases 4 als plane Fläche ausgebildet. Es ist jedoch auch möglich, dass Vorder- und Rückseite 11, 12 gekrümmt ausgebildet sind, wie in Fig. 2 gezeigt ist. Das Hologramm 13 kann bei der Ausführungsform gemäß Fig. 2 und 3 als reflektives Hologramm ausgebildet sein.

Es ist jedoch auch möglich, das Hologramm 13 als transmissives Hologramm auszubilden. In diesem Fall wird das Hologramm 13 an der Rückseite 12 angeordnet, wie in Fig. 4 schematisch dargestellt ist.

Die Seite 18 der Kollimationsoptik 8, auf die das divergierende Strahlenbündel 10 trifft, kann auch als Eingangsschnittstelle 18 der Beleuchtungsoptik 7 bezeichnet werden.

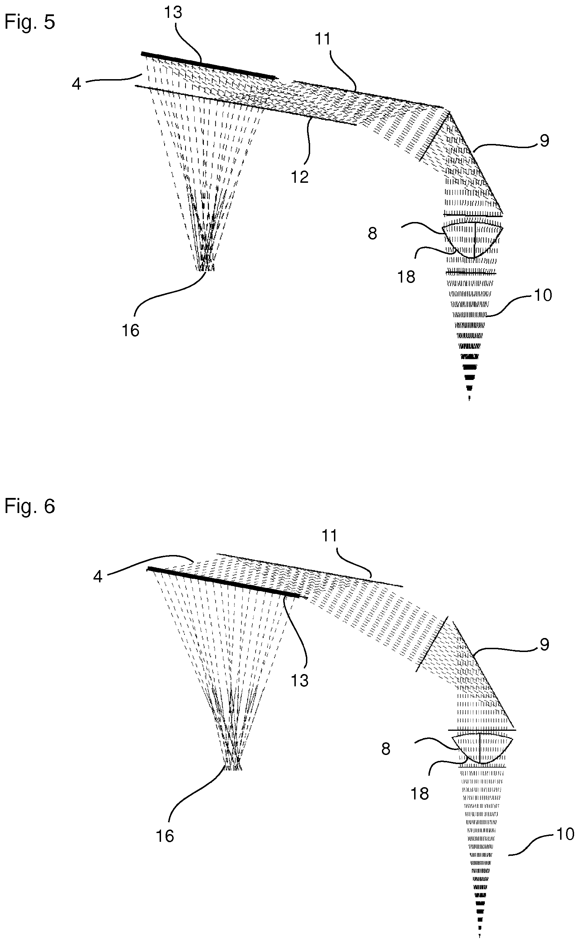

In Fig. 5 ist eine Abwandlung der Ausführungsform gemäß Fig. 3 gezeigt. Bei der Ausführungsform von Fig. 5 sind die Streueigenschaften des Auskoppelhologramms 13 erhöht, so dass der Fokus 16 eine größere laterale Ausdehnung aufweist im Vergleich zu der Ausführungsform gemäß Fig. 3.

Gleiches gilt für die in Fig. 6 gezeigte Abwandlung der Ausführung der Beleuchtungsvorrichtung 1 gemäß Fig. 4.

Das Auskoppelhologramm 13 ist insbesondere als Volumenhologramm ausgebildet. Die Ausbildung als Hologramm führt zu dem Vorteil, dass ein ungestörter Durchblick für Licht aus dem sichtbaren Wellenlängenbereich für den Benutzer vorliegt. Gerade bei der Ausbildung als Volumenhologramm kann die hohe Selektivität der Umlenkreflexion hinsichtlich der Wellenlänge der einfallenden Strahlung und hinsichtlich des Einfallswinkels dazu genutzt werden, dass der angegebene ungestörte Durchblick für Licht aus dem sichtbaren Wellenlängenbereich vorliegt. So ist das Hologramm 13 abseits der sogenannten Bragg-Bedingung, die den effizienten Einfallswinkel und die effiziente Wellenlänge verknüpft, transparent und ohne weitere optische Funktion.

Die augenseitige numerische Apertur der Beleuchtungsoptik 7 liegt bevorzugt im Bereich zwischen 0,1 und 0,5 und besonders bevorzugt im Bereich zwischen 0,25 und 0,4. Der Fokus 16 kann kreisförmig sein. Der Durchmesser D des Fokus 16 liegt bevorzugt im Bereich von größer oder gleich als 0,1 mm und kleiner oder gleich 10 mm, oder größer oder gleich als 1 mm und kleiner oder gleich als 10 mm. Insbesondere beträgt der Durchmesser D bevorzugt 1 mm ≤ D ≤ 10 mm oder 2 mm ≤ D ≤ 5 mm. Natürlich kann die Form des Fokus 16 nicht nur kreisförmig sein, sondern auch eine abweichende Form von der Kreisform aufweisen. Beispielsweise kann eine elliptische, eine rechteckige, eine quadratische oder eine beliebige andere Form vorliegen. In diesem Fall beziehen sich die angegebenen Durchmesserwerte auf den kleinsten Kreis, in dem der Fokus 16 mit der von der Kreisform abweichenden Form vollständig enthalten ist.

Die im Fokus 16 angebotene Energie kann bevorzugt im Bereich zwischen 1 mW und 200 mW und besonders bevorzugt im Bereich zwischen 10 mW und 100 mW liegen. Die genaue Dimensionierung kann unter Berücksichtigung des Energiebedarfs des Implantats 2, der biologischen Grenzwerte und der für den Benutzer sinnvollen Augendrehwinkel erfolgen.

Der Abstand des Fokus 16 vom Brillenglas 4 liegt bevorzugt in einem Bereich zwischen 12 mm und 35 mm und besonders bevorzugt in einem Bereich zwischen 23 mm und 27 mm.

Die Dicke des Brillenglases liegt bevorzugt in einem Bereich zwischen 1 mm und 10 mm und besonders bevorzugt in einem Bereich zwischen 3 mm und 5 mm. Der Einfallswinkel der Strahlen im Inneren des Brillenglases 4 liegt bevorzugt zwischen 45° und 80° und besonders bevorzugt zwischen 60° und 75°. Bei vorgegebener numerischer Apertur hängen beide Größen voneinander ab, da das einfallende Licht 10 das Hologramm 13 nicht zweimal treffen sollte. Bei hohen Einfallswinkeln im Brillenglas 4 kann das Brillenglas 4 tendenziell dünner gestaltet werden, für geringere Einfallswinkel wird ein dickeres Brillenglas 4 benötigt.

Die Anzahl der Totalreflexionen im Inneren des Brillenglases 4 kann variieren, bevorzugt zwischen einer Totalreflexion und fünf Totalreflexionen. Für die besonders bevorzugten Abstände, Winkel und Kopfgeometrien sind zwei Reflexionen für den Fall eines Reflexionshologramms und eine Reflexion für den Fall eines Transmissionshologramms besonders bevorzugt.

Statt Totalreflexionen können auch reflektive Schichten S1, S2 (Fig. 2) auf der Vorder- und/oder Rückseite 11, 12 ausgebildet sein, die die gewünschte Reflexion bewirken. Die reflektive Schicht oder die reflektiven Schichten können auch von der Vorderseite 11 bzw. von der Rückseite 12 beabstandet und somit im Brillenglas 4 vergaben ausgebildet sein.

Die Brechzahl des Materials für das Brillenglas 4 liegt bevorzugt in der Nähe bzw. geringfügig über der Brechzahl des zur Aufnahme des Hologramms 13 verwendeten Materials. Bevorzugt liegt die Brechzahl daher im Bereich zwischen 1,4 und 1,6 und besonders bevorzugt im Bereich zwischen 1,48 und 1,55. Falls die Brechzahldifferenz im Vergleich zum Hologrammmaterial zu groß ist, werden die Reflexionsverluste an der Grenzfläche zu groß. Wenn die Brechzahl des Substrats größer als die der Folie des Hologramms 13 ist, kann an der Grenzfläche Totalreflexion auftreten. Außerdem fällt das Licht 10 im Inneren der Hologrammfolie dann streifend ein, was die technische Realisierung des Hologramms 13 erschwert.

Das Material des Brillensubstrates kann ein optisches Glas oder ein optischer Kunststoff sein, so lange dessen jeweilige Transmission für die betrachtete Beleuchtungswellenlänge hinreichend groß ist. Wegen des geringen Gewichts sind Kunststoffe bevorzugt. Mögliche Materialien sind z.B. PMMA, Polycarbonat, Zeonex oder CR39.

Die Lichtquelle 6 stellt bevorzugt Licht im Infrarotbereich zur Verfügung. Insbesondere kann die Lichtquelle 6 Licht außerhalb des sichtbaren Spektralbereichs zur Verfügung stellen. Besonders bevorzugt ist ein schmalbandiges, kohärentes Laserlicht 10 mit einer Halbwertsbreite von kleiner als 10 nm. Die laterale Ausdehnung der Lichtquelle 6 und somit der abgegebenen Lichtstrahlen ist gering, beispielsweise bevorzugt kleiner als 100 $\mu$m, z.B. im Bereich von 5 bis 15 $\mu$m. Besonders bevorzugt handelt es sich um eine Single-Mode-Laserquelle 6.

Falls die Halbwertsbreite der spektralen Emission der Lichtquelle 6 deutlich größer ist, sinkt die Effizienz der Auskopplung des Hologramms 13 für Wellenlängen abseits des Peakmaximums. Überschreitet die laterale Ausdehnung der Quelle 6 je nach Brennweite der Kollimationsoptik 8 eine gewisse Größe, so sinkt ebenfalls die Effizienz der Auskopplung, weil das Hologramm 13 nur einen endlichen Winkelbereich einfallender Strahlung 10 effizient umlenken kann.

Die Lichtquelle 6 besitzt ferner besonders bevorzugt eine schnelle und eine langsame Achse, d.h. die Divergenz der angebotenen Strahlung weist für unterschiedliche Azimute (x und y) unterschiedliche Werte auf. Dies ist für kommerziell verfügbare Single-Mode-Halbleiterlaser der Fall. Die Divergenzen unterscheiden sich bevorzugt um einen Faktor 1,5 bis 4. Der hologrammbasierten Auskopplung wohnt ein Projektionseffekt inne, der diesen Divergenzunterschied nach der Auskopplung ohne weitere optische Komponente je nach verwendetem Einfallswinkel in eine rotationssymmetrische und somit bevorzugte Winkelverteilung am Auge 14 umwandelt.

Der Projektionsfaktor ist der Cosinus des Einfallswinkels am Hologramm 13, d.h. bei einem Einfallswinkel von 60° beträgt er ca. 0,5 und bei einem Einfallswinkel von 75° beträgt er ca. 0,26. Dadurch wird ein Divergenzunterschied zwischen Faktor 2 bis 4 kompensiert.

Die Lichtquelle 6 gibt bevorzugt aber nicht zwingend linear polarisierte Beleuchtungsstrahlung 10 ab. Besonders bevorzugt liegt die lineare Polarisation senkrecht zur Ebene, die die langsame (kurze) Achse der Diode 6 aufspannt. Für diese Polarisation ist ein typisches Volumenhologramm 13 besonders effizient. Falls, wie für technisch verfügbare Laserdioden 6 der Fall, die Polarisation senkrecht zu dieser bevorzugten Achse liegt, kann erfindungsgemäß entlang des Strahlengangs eine Verzögerungsplatte oder -folie ($\lambda$/2 Platte, nicht gezeigt) eingebracht werden, die die Polarisationsrichtung nach Durchgang durch die Verzögerungsplatte oder -folie dreht. Die Verzögerungsplatte oder -folie wird bevorzugt in dem Bereich des kollimierten Strahlenbündels 10 eingebracht, also beispielsweise vor der Einkopplung in das Brillenglas 4 oder vor der Auskopplung durch das Hologramm 13.

Erfindungsgemäß kann anstelle einer $\lambda$/2-Platte auch ein hinsichtlich Phasenverschiebung und Orientierung beliebiges Verzögerungselement ($\lambda$/4-Platte bzw. $\lambda$/x-Platte) sowie Kombinationen verschiedener solcher Elemente eingebracht werden. Diese werden bevorzugt dann eingesetzt, wenn die Kollimationsoptik den Polarisationszustand des Bündels ungünstig beeinflusst. Mithilfe des passenden Verzögerungselements wird dann eine entgegengesetzte Kompensation bewirkt.

Für die Gestaltung der Kollimationsoptik 8 gibt es verschiedene Lösungen, beispielsweise durch refraktive Elemente, insbesondere rundoptische, refraktive Elemente (sphärische Linsen, Asphären), durch reflektive Elemente oder Kollimationsspiegel (sphärisch, asphärisch oder als Freiformelement ausgebildet) und/oder durch diffraktive Elemente. Die Umlenkung des kollimierten Lichtes 10 aus Richtung des Brillenbügels in das Brillenglas 4 kann durch Spiegel, Umlenkprismen (wie gezeigt) oder durch diffraktive Elemente erreicht werden.

Die Abstrahlcharakteristik der Lichtquelle 6, d.h. die Winkelverteilung der von der Lichtquelle 6 abgestrahlten Leistung, weist für kommerziell erhältliche Dioden in der Regel eine endliche Halbwertsbreite auf. Das bedeutet, dass die in eine Raumrichtung abgestrahlte Leistung mit zunehmendem Winkel abnimmt. Die Brennweite der Kollimationsoptik 8 wird erfindungsgemäß bevorzugt so angepasst, dass die äußeren, im Brillenglas 4 geführten Strahlen noch eine gewisse Leistung pro Fläche übertragen. Bei einer kurzen Brennweite wird viel des angebotenen Lichtes von der Kollimationsoptik 8 gesammelt, jedoch tragen die äußeren Bündelstrahlen mit deutlich weniger Leistung pro Fläche zur Gesamtenergie bei. Bei einer langen Brennweite ist die Leistungsverteilung über den Bündelquerschnitt deutlich homogener, jedoch wird ein größerer Teil der angebotenen Energie nicht übertragen.

Erfindungsgemäß kann die Brennweite so gewählt werden, dass der Randabfall im Bereich von 50% und 10% der Beleuchtungsstärke des Bündelzentrums liegt.

Falls der Projektionsfaktor des Auskoppelhologramms 13 bei der eingestellten Dicke des Brillenglases 4 und beim eingestellten Einfallswinkel nicht hinreichend genau dem Divergenzunterschied der Diodenachsen entspricht, kann die Kollimationsoptik 8 anamorphotisch ausgeführt werden (d.h. mit unterschiedlichen Brennweiten im x- und y-Schnitt). Dies kann z.B. durch Einbringen von refraktiven, difraktiven und/oder reflexiven Zylinderflächen geschehen.

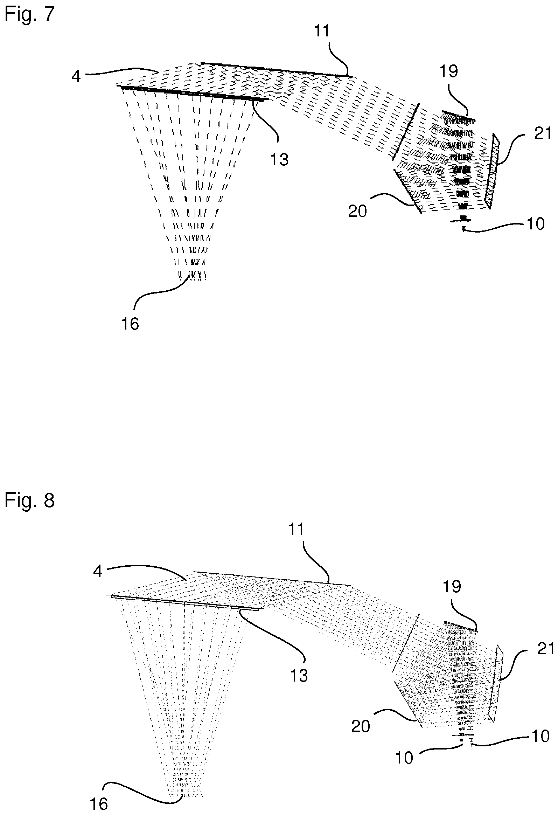

Die für die oben genannten Bedingungen resultierenden Brennweiten und daher Baulängen der Kollimationsoptik 8 sind unter Umständen sehr lang, d.h. z.B. größer als 20 mm. Es ist daher vorteilhaft, diese kompakt zu falten, um sie platzsparend in einem Brillengestell zu integrieren. Bei einer Lösung in Form einer spiegelnden Kollimationsoptik 8 sollten die Einfallswinkel am abbildenden Spiegel jedoch nicht zu groß werden. Eine besonders bevorzugte Faltung der Kollimationsoptik 8 ist in Fig. 7 gezeigt. Bei der gezeigten Faltung trifft das Strahlenbündel 10 der Lichtquelle 6 auf einen ersten Spiegel 19, der als Zylinderfläche ausgebildet ist, wird von diesem auf einen zweiten Spiegel 20, der als Planfläche ausgebildet ist, reflektiert. Vom zweiten Spiegel 20 wird das Strahlenbündel 10 auf den dritten Spiegel 21, der als Freiformspiegel oder als außeraxial genutzte asphärische, rotationssymmetrische Fläche ausgebildet ist, reflektiert und von diesem dann in das Brillenglas 4 eingekoppelt. Man kann somit in dieser Ausführungsform das Umlenkprisma 9 weglassen. Wie der Darstellung von Fig. 7 zu entnehmen ist, ist das Auskoppelhologramm 13 als transmissives Hologramm auf der Rückseite 12 ausgebildet.

Durch die Faltung mit den drei Spiegeln 19-21 kann der Einfallswinkel am Freiformspiegel 21 kleiner als 25° sein und kann trotz der kompakten Bauweise eine Brennweite im Bereich von z.B. 20 mm und 40 mm realisiert werden. Die oben genannte Divergenzkorrektur wird mittels des ersten Spiegels 19, der als Zylinderfläche ausgebildet ist, erreicht.

In weiteren Ausführungsbeispielen können alle oder ggf. zusätzliche Wirkflächen der Kollimationsoptik auch andere, d.h. beliebige Kombinationen der o.g. Flächenformen aufweisen, also Planflächen, sphärische Flächen, zylindrische Flächen, torische Flächen, rotationssymmetrische asphärische Flächen, außeraxial genutzte asphärische Flächen oder Freiformflächen. Außerdem können ggf. weitere abbildende Funktionen auf die Wirkflächen aufgebracht werden, zum Beispiel diffraktive Elemente (Gitter, Volumenhologramme) oder Fresnelelemente. Die Auswahl der geeigneten Kombination hängt von den Spezifikationen der gewählten Lichtquelle ab.

Aufgrund herstellungsbedingter Toleranzen bei der Belichtung des Hologramms 13 kann der effizienteste Einfallswinkel (Bragg-Bedingung) des Hologramms 13 variieren. Ebenso kann die Peakwellenlänge der Lichtquelle 6 von Bauteil zu Bauteil schwanken. Um für einen sinnvollen Wellenlängenbereich und für sinnvolle Fertigungstoleranzen eine effiziente Auskoppelstruktur (hier Auskoppelhologramm 13) zu erhalten, ist die Kollimationsoptik 8 für ein kleines Feld ausgebildet. Somit kann bei der erfindungsgemäßen Beleuchtungsvorrichtung 1 die Lichtquelle 6 lateral verschoben werden, wodurch sich der mittlere Einfallswinkel der Strahlen am Hologramm 13 verändern lässt. Dies ist schematisch in Fig. 8 für zwei verschiedene Positionen der Lichtquelle 6 gezeigt, wobei in Fig. 8 jedoch stets nur das von der Lichtquelle 6 abgegebene divergierende Strahlenbündel 10 eingezeichnet ist.

Insbesondere kann die Kollimationsoptik 8 so gestaltet sein, dass Schwankungen des Einfallswinkels über das gesamte genutzte Strahlenbündel 10 bevorzugt kleiner 1° und besonders bevorzugt kleiner 0,1° sind. Die laterale Verschiebung soll bevorzugt einen Justagebereich von ± 5° am Auskoppelhologramm 13 und insbesondere von ± 1° am Auskoppelhologramm 13 abdecken.

Alternativ kann die Anpassung des Einfallswinkels auch durch gezielte Verkippung der Kollimationsoptik relativ zum Brillenglas und anschließende Fixierung erfolgen. Diese Winkelmanipulation kann beispielsweise durch einen variablen Kittkeil zwischen beiden verkitteten oder verklebten Elementen, variable Prismenkeile, verstellbare Umlenkspiegel oder ähnliche optische Prinzipien erfolgen.

Ferner kann die Kollimationsoptik 8 für geringe axiale Abweichungen ausgelegt sein, d.h. die Lichtquelle 6 kann zum Ausgleich fertigungsbedingter Toleranzen auch entlang der Richtung des abgegebenen Strahlenbündels 10 verschoben werden, um die Gesamteffizienz des Auskoppelhologramms 13 zu maximieren.

Ein Vorteil der beschriebenen Lösung mit dem kollimierten Strahlenbündel 10 liegt darin, dass über unterschiedliche Abstände zwischen dem Brillenglas 4 und der Kollimationsoptik 8 die Beleuchtungsoptik 7 ohne Einbußen in der Effizienz an verschiedene Kopfbreiten von Benutzern angepasst werden kann. Die unterschiedlichen Abstände sind bei der erfindungsgemäßen Beleuchtungsvorrichtung 1 einstellbar. Die Anpassung an verschiedene Pupillenabstände der Benutzer kann durch laterale Verschiebung der gesamten Beleuchtungsoptik 7 relativ zum Kopf oder Auge 14 des Benutzers durchgeführt werden.

Ein besonderer Vorteil der volumenholographischen Beleuchtungsoptik 7 besteht darin, dass eine Streufunktion zusätzlich zur Fokussierfunktion in das Auskoppelhologramm 13 eingebracht werden kann. Dies kann z.B. dadurch realisiert werden, dass bei der Belichtung eine der beiden Wellen durch eine gezielte statistische Strahlablenkung mittels Einbringen einer Streuscheibe beeinflusst wird. Damit kann ein hoher Lichtleitwert (Produkt aus numerischer Apertur und Lichtfleckdurchmesser) erst sehr augennah erzeugt werden. Das bedeutet, dass die Übertragung innerhalb des Brillenglases 4 noch als einzelnes Strahlenbündel 10 einer Punktquelle erfolgen kann. Erst die letzte optisch wirksame Fläche (hier das Auskoppelhologramm 13) vergrößert den Lichtleitwert durch Streuung auf die gewünschte Größe. Dies vermindert den technischen Aufwand verglichen mit Lösungen, die das Bild einer bereits an der Quelle 6 ausgedehnten leuchtenden Fläche in den Drehpunkt 15 des Auges 14 abbilden.

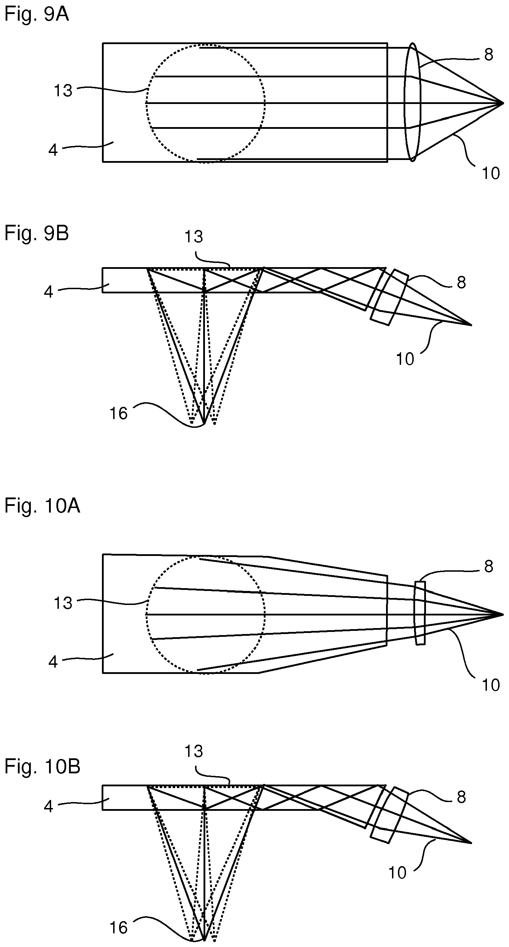

Falls die Anpassung an verschiedene Kopfbreiten von Benutzern nicht über die Beleuchtungsoptik 7 sondern z.B. rein mechanisch erfolgt, kann von der strengen Kollimation im Inneren des Brillenglases 4 abgewichen werden. Dann ist auch ein divergenter Strahlenverlauf in einem der beiden Azimute möglich. Die Kollimationsoptik 8 ist dann z.B. nicht mehr rotationssymmetrisch, sondern definiert defokussiert in einem der beiden Azimute (x- oder y-Schnitt). In Fig. 9a und 9b ist der rotationssymmetrische Fall schematisch dargestellt. In Fig. 10a und 10b ist hingegen der erwähnte definierte defokussierte Fall gezeigt. Der Vorteil dieser Konfiguration besteht in einer schlanken Bündelgeometrie im Bereich des Brillenbügels. Damit ist es leichter möglich, die Brille bzw. die Haltevorrichtung 3 ästhetisch ähnlicher zu einer herkömmlichen Brille zu gestalten. Die bisher beschriebenen Ausführungsformen können als nicht-telezentrische Beleuchtung mit einer Streufunktion, die erst augennah vor dem Austritt des Strahlenbündels 10 aus dem Brillenglas 4 erfolgt, charakterisiert werden. Dazu ist nicht zwingend ein Volumenhologramm 13 notwendig. Eine ähnliche technische Umsetzung kann mit einem speziell dichroitisch beschichteten und statistisch modifizierten Oberflächengitter realisiert werden. Auch kann eine im Sub-Millimeterbereich strukturierte, statistisch modifizierte Fresnel-Linse oder ein entsprechender Fresnel-Spiegel vorgesehen sein. Die Fresnel-Struktur der Linse bzw. des Spiegels sollte dann zur Gewährleistung der Durchblickfunktion dichroitisch beschichtet sein und im Material des Brillenglases 6 vergraben sein. Das bedeutet, dass die Flanken bevorzugt mit einem hinreichend brechzahlangepassten Material aufgefüllt sind, so dass z.B. die Vorderseite 11 bzw. die Rückseite 12 trotz der Fresnel-Struktur als durchgehende glatte Oberfläche ausgebildet ist.

Ein Vorteil des Volumenhologramms 13 liegt in der technologischen einfachen Umsetzung z.B. als Folie und in der hohen erreichbaren Umlenkeffizienz.

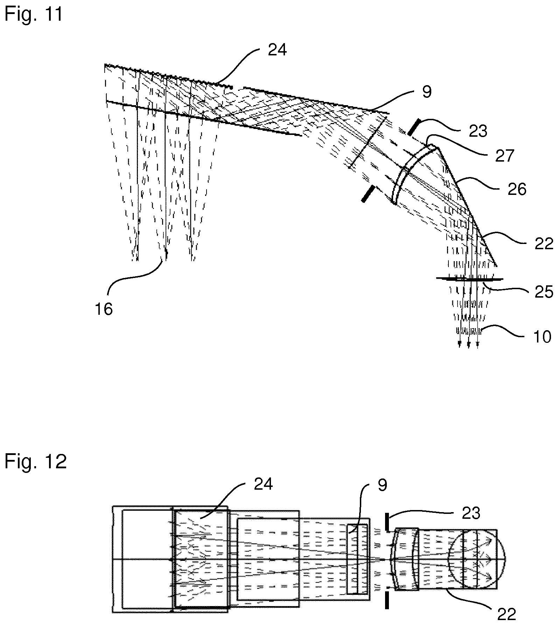

In Fig. 11 und 12 ist eine weitere Ausführungsform der erfindungsgemäßen Beleuchtungsvorrichtung 1 gezeigt, bei der die Lichtquelle 6 eine lateral ausgedehnte Lichtquelle 6 ist und somit ein lateral ausgedehntes divergierendes Strahlenbündel 10 abgibt. Der Lichtquelle 6 ist in dieser Reihenfolge eine Abbildungsoptik 22, eine Telezentrieblende 23, das Umlenkprisma 9 sowie das erste Brillenglas 4 nachgeordnet. Statt des Auskoppelhologramms weist das erste Brillenglas 4 bei der hier beschriebenen Ausführungsform ein nachfolgend noch näher beschriebenes Fresnel-Element 24 auf.

Die leuchtende Fläche der Lichtquelle 6 wird von der Abbildungsoptik 22 in eine bestimmte Entfernung in das Brillenglas 4 hinein abgebildet. Das Licht 4 wird dabei im Inneren des Brillenglases 4 durch Totalreflexion geführt und schließlich durch das Fresnel-Element 24 so umgelenkt, dass es die Totalreflexion verlässt und aus dem Brillenglas 4 austritt. Das entstehende Bild der Lichtquelle 6 befindet sich dann in einem definierten Abstand vom Brillenglas 4 im Auge 14 und z.B. in der Pupillenebene des Auges 14 oder gemäß der vorliegenden Erfindung im Drehpunkt 15 des Auges 14. Auch kann es nah an diesen Positionen sein. Darunter wird insbesondere ein Abstand in Ausbreitungsrichtung des Lichtbündels von ± 5 mm, ± 4 mm, ± 3 mm, ± 2 mm oder ± 1 mm relativ zu diesen Positionen verstanden.

Wie insbesondere in Fig. 11 ersichtlich ist, kann die Abbildungsoptik 22 als Eintrittsfläche 25 eine sphärische Fläche, eine Zylinderfläche oder eine Freiformfläche aufweisen. Die Eintrittsfläche 25 kann auch als optische Eingangsschnittstelle der Beleuchtungsoptik 7 bezeichnet werden.

Der Eintrittsfläche 25 ist eine plane Umlenkfläche 26 nachgeordnet und die Abbildungsoptik 22 weist als Austrittsfläche 27 eine Zylinder- oder Freiformfläche auf.

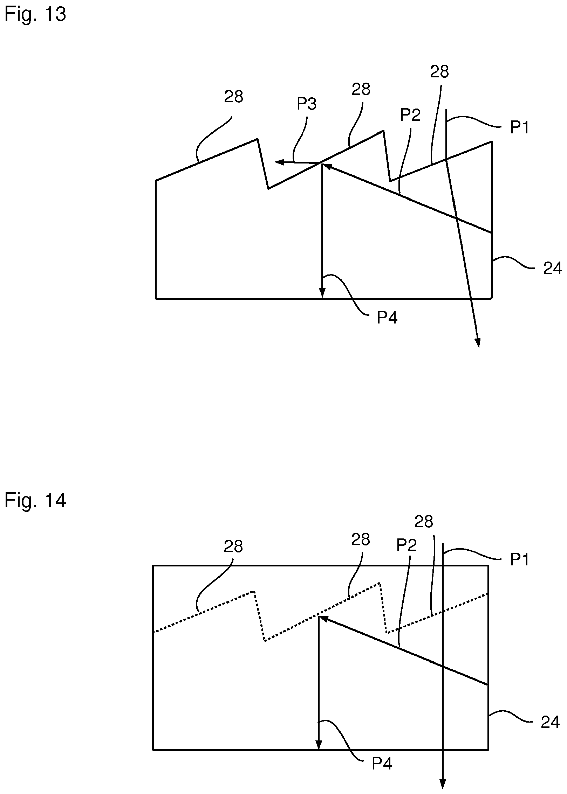

Wie in der vergrößerten Detailansicht in Fig. 13 des Fresnel-Elementes ersichtlich ist, kann das Fresnel-Element 24 unbeschichtete, freiliegende Fresnel-Flanken 28 aufweisen. Dies führt jedoch zu einer Störung der Durchblickrichtung, wie durch den Pfeil P1 angedeutet ist. Auch ist die Effizienz der Umlenkung relativ gering, wie durch die Pfeile P2, P3 und P4 angedeutet ist.

In Fig. 14 ist eine Abwandlung des Fresnel-Elementes 24 gezeigt. Bei dieser Abwandlung sind die Fresnel-Flanken 28 dichroitisch beschichtet. Damit kann erreicht werden, dass die für die Beleuchtung des Implantats 2 benötigte Wellenlänge zu einem hinreichend großen Anteil reflektiert wird, wie durch die Pfeile P2 und P4 angedeutet ist. Der hinreichend große Anteil kann beispielsweise größer oder gleich als 50 % betragen. Der sichtbare Spektralbereich oder zumindest Teile davon werden hingegen zu einem hinreichend großen Anteil transmittiert, wie durch den Pfeil P1 angedeutet ist. Der hinreichend große Anteil kann z.B. größer oder gleich als 50 % betragen. Des Weiteren ist die in Fig. 14 bezeichnete Fresnel-Struktur vergraben, d.h. die optisch wirksamen, dichroitischen Fresnel-Flanken 28 sind mit einem Material aufgefüllt, welches im sichtbaren Spektralbereich denselben oder näherungsweise denselben Brechungsindex aufweist wie das restliche Material des Brillenglases 4. Die Unterschiede der Brechzahlen können beispielsweise kleiner oder gleich als 0,01 sein (für den hier interessierenden Wellenlängenbereich für den Durchblick).

Das Fresnel-Element 24 lässt sich beispielsweise als ein Höhenprofil beschreiben, dessen Grundform durch eine Summe aus x-y-Polynom dargestellt wird:

$$z_G(x, y) = \sum_{i,j} a_{ij} x^i y^j$$

Dies ist jedoch nicht als Einschränkung zu verstehen. Vielmehr sind alle weiteren Darstellungen für Freiformflächen natürlich auch möglich.

Überschreitet die Pfeilhöhe $z_G$ eine vorher definierte Flankenhöhe $h_F$, so wird die Profilform um ein ganzzahliges Vielfaches dieser Flankenhöhe vermindert, bis die modifizierte Pfeilhöhe wieder in das Intervall [0... $h_F$] bzw. [- $h_F$...0] fällt.

Die ersten zwei Terme des Polynoms $a_{10}x + a_{01}y$ beschreiben eine geneigte Ebene. Die beiden Parameter $a_{10}$ und $a_{01}$ werden deshalb erfindungsgemäß so gewählt, dass innerhalb des Brillenglases 4 ein definierter Einfallswinkel des Hauptstrahls des Achsbündels eingestellt wird. Ist der Einfallswinkel der Strahlen 10 im Brillenglas 4 zu klein, so ist keine Totalreflexion mehr möglich. Ist der Einfallswinkel zu groß, so vergrößern sich die abgeschatteten Bereiche zwischen den Fresnel-Flanken 28 und die Sensitivität auf Fertigungstoleranzen des Fresnel-Elements 24 sowie des Brillenglases 4 nimmt außerdem zu.

Der Einfallswinkel der Strahlen 10 im Inneren des Brillenglases 4 liegt daher bevorzugt zwischen 45° und 85° und besonders bevorzugt zwischen 60° und 75°. Für übliche Brillenglasbrechzahlen liegen die Koeffizienten daher im Bereich $0,4 < |a_{01}, a_{10}| < 0,9$.

Die Dicke des Brillenglases 4 kann so gewählt werden, dass bei gedachter Ausbreitung des Lichtes in umgekehrter Richtung, d.h. vom Auge 14 zur Lichtquelle 6, das Licht nach Reflexion am Fresnel-Element 24 und nach einer weiteren Totalreflexion an der dem Fresnel-Element 24 gegenüberliegenden Rückseite 12 das Fresnel-Element 24 nicht noch ein weiteres Mal trifft. Bei hohen Einfallswinkeln im Brillenglas 4 kann das Brillenglas 4 tendenziell dünner gestaltet werden. Für geringe Einfallswinkel wird ein dickeres Brillenglas 4 benötigt. Die Dicke des Brillenglases 4 liegt bevorzugt zwischen 1 mm und 10 mm und besonders bevorzugt zwischen 3 mm und 5 mm.

Die nächsten zwei Terme des Polynoms $a_{20}x^2 + a_{02}y^2$ beschreiben eine in den beiden Azimuten gegebenenfalls unterschiedlich gekrümmte parabolische Fläche, d.h. die paraxiale Brechkraft der Fläche im x- und y-Schnitt. Diese Terme können so gewählt werden, dass sich der vordere, d.h. augenferne Brennpunkt der Fläche, auf oder zumindest in der Nähe einer am Eintritt in das Brillenglas 4 angebrachten Aperturblende befindet. In dieser Ebene schneiden sich also sowohl im x- als auch im y-Schnitt achsparallele Strahlen, die von der Augenseite aus auf das Brillenglas 4 einfallen. Diese Strahlen sind in Fig. 12 durchgehend gezeichnet.

Auf diese Weise wird die dort angebrachte Aperturblende zu einer Telezentrieblende, d.h. die Anordnung gewährleistet eine telezentrische Beleuchtung des Auges 14. Wegen des schrägen Einfalls auf das Fresnel-Element 24 sind die beiden Brechkräfte im x- und y-Schnitt, d.h. auch die beiden Koeffizienten $a_{20}$ und $a_{02}$, unterschiedlich groß. Für übliche Brillengeometrien liegen die beiden Koeffizienten erfindungsgemäß im Bereich $0,001 < |a_{20}, a_{02}| < 0,05$.

Die Form der Telezentrieblende 23 kann beliebig sein. Bevorzugt ist es kreisförmig, ellipsenförmig, quadratisch oder rechteckig.

Die weiteren Koeffizienten der Fläche können entweder für die Verbesserung der Blendenabbildung verwendet werden oder für die Verringerung der Abbildungsfehler der abbildenden Lichtquelle 6 optimiert werden. In der Praxis wird das Design zwischen beiden Anforderungen vermitteln, je nach Anforderung der konkreten Anwendung.

Die Flankenhöhe $h_F$ der Fresnel-Flanken 28 liegt bevorzugt im Bereich zwischen $0,02$ mm $< h_F < 1$ mm. Zu kleine Höhen der Fresnel-Flanken 28 stören aufgrund von eventuellen Beugungseffekten die Abbildung. Zu große Höhen der Fresnel-Flanken 28 können als störende Modulation der Beleuchtungsverteilung sichtbar werden.

Die augenseitige numerische Apertur liegt bevorzugt im Bereich zwischen 0,05 und 0,5, besonders bevorzugt im Bereich zwischen 0,1 und 0,25. Der Durchmesser D des Bildes 16 der Lichtquelle 6 am Auge beträgt bevorzugt 0,1 mm < D < 15 mm, insbesondere 1 mm < D < 15 mm und besonders bevorzugt 2 mm < D < 10 mm. Der Durchmesser D beschreibt den Durchmesser eines kreisförmigen Bildes 16. Falls das Bild 16 nicht kreisförmig ist, beschreibt es den Durchmesser des kleinsten Kreises, in dem das Bild 16 vollständig enthalten ist.

Die Form des Lichtflecks 16 bzw. des Bildes 16 kann kreisförmig, elliptisch, rechteckig, quadratisch oder eine andere Form aufweisen, die durch eine technische verfügbare Lichtquelle oder Streuscheibe realisiert werden kann. Die im Fokus 16 angebotene Energie liegt bevorzugt im Bereich zwischen 1 mW und 200 mW und besonders bevorzugt zwischen 10 mW und 100 mW. Die genaue Dimensionierung kann unter Berücksichtigung des Energiebedarfs des Implantats 2, der biologischen Grenzwerte und der für den Träger sinnvollen Augendrehwinkel erfolgen.

Der Lichtfokus 16 hat für die hier beschriebene Beleuchtungskonfiguration vom Brillenglas 4 bevorzugt einen Abstand zwischen 10 mm und 25 mm und besonders bevorzugt einen Abstand zwischen 12 mm und 20 mm.

Ferner kann der Lichtfokus 16 vom Brillenglas 4 bevorzugt einen Abstand zwischen 12 mm und 35 mm und besonders bevorzugt einen Abstand zwischen 23 mm und 27 mm aufweisen.

Die Anzahl der Totalreflexionen im Inneren des Brillenglases 4 kann variieren, bevorzugt zwischen einer Totalreflexion und fünf Totalreflexionen.

Die Brechzahl des Substrates des Brillenglases 4 ist für die Funktion nicht vordergründig entscheidend, so lange die Bedingung der Totalreflexion im Inneren eingehalten ist. Bevorzugt sind daher transparente Substrate mit hoher Brechzahl von größer als 1,4 und besonders größer als 1,6. Falls die Lichtführung im Brillenglas 4 nicht durch innere Totalreflexion sondern durch reflektive Schichten, die auf der Vorder- und/oder Rückseite 11, 12 oder von der Vorder- und/oder Rückseite 11, 12 beabstandet sind, erfolgt, hat die Brechzahl keinen Einfluss auf die Lichtführung im Brillenglas 4.

Das Material des Brillenglases 4 kann ein optisches Glas oder ein optischer Kunststoff sein, so lange dessen jeweilige Transmission für die betrachtete Beleuchtungswellenlänge hinreichend groß ist. Wegen des geringen Gewichts sind Kunststoffe bevorzugt. Mögliche Materialien sind z.B. PMMA, Polycarbonat, Zeonex oder CR39.

Durch die Umlenkung mittels des Fresnel-Elementes 24 wird eine deutlich verbesserte Abbildungsleistung verglichen mit einer ähnlichen Lösung auf Basis einer abbildenden diffraktiven Struktur (z.B. Oberflächengitter oder Volumenhologramm) erreicht. Für Systeme auf Basis eines diffraktiven Auskoppelelementes entstehen bei einer Abbildung von großen Feldern und großen numerischen Aperturen starke Abbildungsfehler, die die Funktion des Beleuchtungssystems 1 einschränken. Die Fehler entstehen, da die Abbildungsgleichung für die diffraktive Ablenkung bei hohen Einfallswinkeln eine starke Nichtlinearität aufweist, verglichen mit der Ablenkung durch eine spiegelnde Fresnel-Fläche 28.

Die Brechkraft der Fresnel-Fläche 28 im x- und y-Schnitt sind bevorzugt unterschiedlich groß. Um ein reelles Bild der Lichtquelle 6 im Fokus 16 einer vorgegebenen augennahen Ebene zu erzeugen, müssen sich die Foki des virtuellen Bildes der Lichtquelle 6 im Inneren des Brillenglases 4 im x- und y-Schnitt ebenfalls passend unterschieden, d.h. passend der Fresnel-Fläche 28 angeboten werden. Die quellenseitige Abbildungsoptik muss daher im x- und y-Schnitt ebenfalls unterschiedliche Brechkräfte aufweisen, so dass von der Lichtquelle 6 aus startende Bündel 10 die geforderte Fokusablage zwischen beiden Azimuten erhalten.

Deshalb weist die quellenseitige Abbildungsoptik 22 mindestens eine Fläche mit unterschiedlicher Brechkraft im x- und y-Schnitt auf. Dies kann beispielsweise durch eine Zylinderfläche, eine Freiformfläche mit unterschiedlichen Zylinderanteilen oder eine außeraxial genutzte sphärische bzw. asphärische Fläche realisiert werden. In der hier beschriebenen Ausführungsform wird dies sowohl bei der Eintrittsfläche 25 als auch bei der Austrittsfläche 27 realisiert.

Im Ergebnis weist der Abbildungsmaßstab zwischen der ausgedehnten Lichtquelle 6 und dem Bild 16 der Lichtquelle 6 am Auge 14 im x- und y-Schnitt einen unterschiedlichen Wert auf. Ein z.B. kreisförmiges Bild der Lichtquelle 6 am Auge 14 erfordert dann eine elliptische Quelle 6, ein quadratisches Bild eine entsprechende rechteckige Quelle 6. Die Hauptursache dieses Unterschieds liegt im Projektionseffekt - ähnlich der Variante mit dem Volumenhologramm - der an der Fresnel-Fläche 24 entsteht.

Die bestimmte Form kann entweder durch gezieltes Design der Quelle 6 erreicht werden, d.h. das leuchtende Material besitzt bereits diese Form, oder durch Abschattung einer größeren Quelle 6 mit einer Blende. Ersteres ist technisch aufwendig, letzteres führt zu hohen Lichtverlusten.

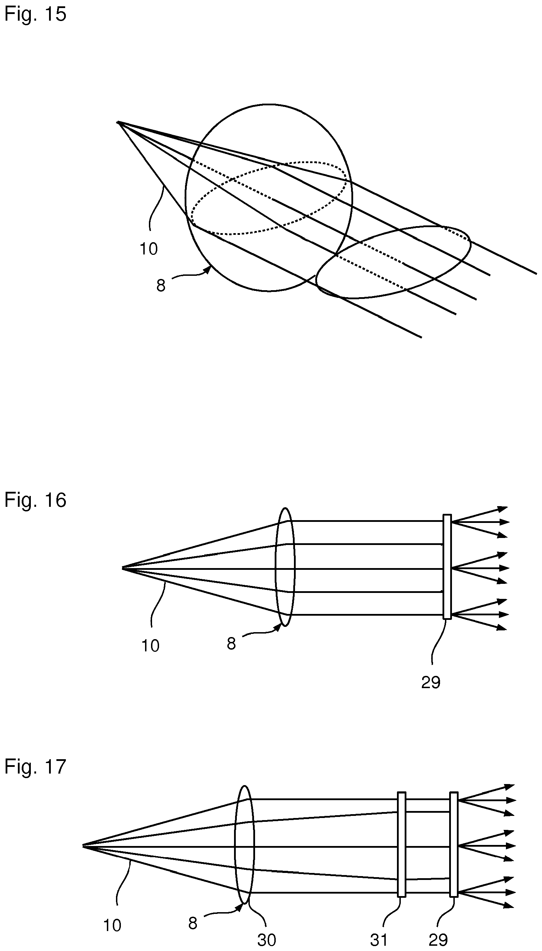

Besonders bevorzugt ist die Verwendung einer effizienten Laserquelle 6, deren laterale Ausdehnung jedoch sehr klein ist. Die gewünschte Ausdehnung kann dann mit einer Streuscheibe erreicht werden. Erfindungsgemäß wird hierbei der Projektionseffekt gezielt ausgenutzt, d.h. eine Halbleiter-Laserdiode 6 mit einer langsamen und einer schnellen Achse wird verwendet (d.h. der Divergenzwinkel der aus der Quelle austretenden Strahlung 10 ist entlang zweier senkrecht aufeinander und senkrecht auf der Ausbreitungsrichtung stehenden Achsen unterschiedlich groß). Technisch verfügbare Quellen 6 weisen diesen Effekt in der Regel auf. Wird das Strahlenbündel 10 einer solchen Quelle, wie schematisch in Fig. 15 gezeigt ist, durch eine einfache rotationssymmetrische Optik 8 kollimiert, so entsteht die gewünschte elliptische Fläche.

Wie in Fig. 16 schematisch angedeutet ist, kann das Bündel 10 durch eine Streuscheibe 29 in eine ausgedehnte Lichtquelle umgewandelt werden, deren Abstrahlcharakteristik auch noch modifiziert werden kann. Alternativ kann, wie in Fig. 17 gezeigt ist, der Lichtquelle 6, die das Strahlenbündel 10 abgibt, eine Asphäre 30 zur Lichtumverteilung, eine schwache Freiformfläche 31 und eine Streuscheibe 29 in dieser Reihenfolge nachgeordnet sein, um die gewünschte ausgedehnte Lichtquelle bereitzustellen.

Die Divergenzen der Laserquelle 6 unterscheiden sich bevorzugt um einen Faktor 1,5 bis 4. Die Lichtquelle 6 stellt bevorzugt Licht außerhalb des sichtbaren Spektralbereichs zur Verfügung, besonders bevorzugt schmalbandiges Licht mit einer Halbwertsbreite von kleiner als 50 nm.

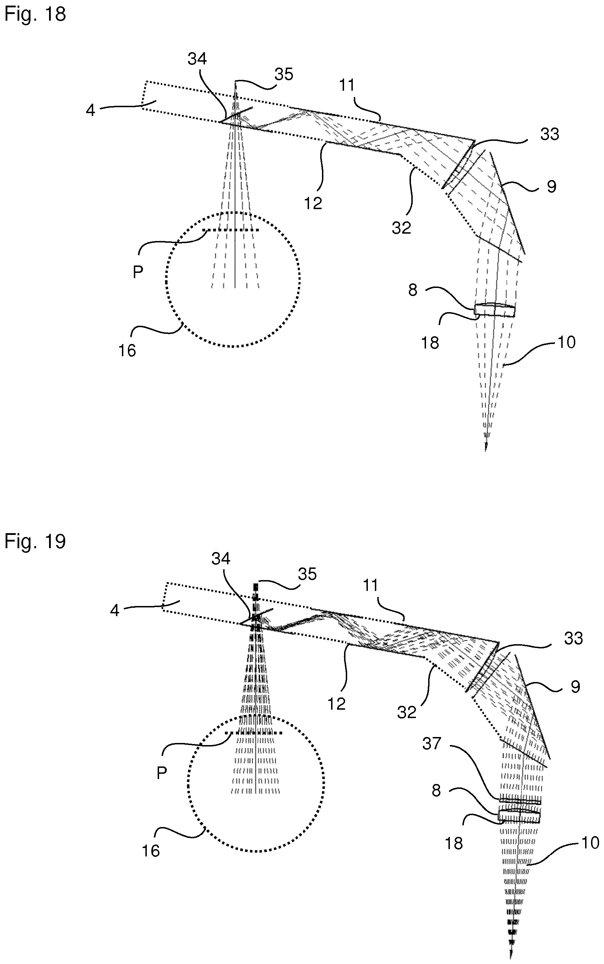

In Fig. 18 ist eine Ausführungsform einer nicht erfindungsgemäßen Beleuchtungsvorrichtung 1 gezeigt. Die Beleuchtungsvorrichtung 1 umfasst, eine Lichtquelle 6, eine Kollimationsoptik 8, ein Umlenkprisma 9, ein Einkoppelprisma 32 mit abbildender Fläche 33, ein Brillenglas 4 sowie eine im Brillenglas 4 vergrabene dichroitische Teilerschicht 34. Die divergierende Strahlung 10 der Lichtquelle 6 wird von der Kollimationsoptik 8 in ein nahezu paralleles Strahlenbündel 10 umgeformt, dann durch das Umlenkprisma 9 in Richtung zum Brillenglas 4 umgelenkt, das das Einkoppelprisma 32 mit abbildender Fläche 33 aufweist und somit das Strahlenbündel 10 in das Brillenglas 4 fokussiert wird, in dem es durch innere Totalreflexion geführt und schließlich durch die vergrabene dichroitische Teilerschicht 34 in Richtung zum Auge 14 hin gelenkt wird.

Um einen möglichst ungestörten Durchblick zu erlauben, ist die Teilerschicht 34 bevorzugt dichroitisch beschichtet, d.h. der für die Beleuchtung des Implantats 2 benötigte Wellenlängenbereich wird zum hinreichend großen Anteil (beispielsweise größer als 50 %) reflektiert. Der sichtbare Spektralbereich oder zumindest Teile davon werden hingegen zu einem hinreichend großen Anteil (beispielsweise $\geq$ 50 %) transmittiert.

Aus dem gleichen Grunde ist die Teilerschicht 34 im Brillenglas 4 vergraben, d.h. die optisch wirksame Fläche der Teilerschicht 34 befindet sich im Inneren des Brillenglases 4, eingebettet zwischen zwei Medien, welche im sichtbaren Spektralbereich denselben oder näherungsweise denselben Brechungsindex aufweisen.

Der Unterschied der Brechzahlen vor und nach der Teilerschicht ist beispielsweise kleiner als 0,01.

Die vergrabene Teilerschicht 34, die auch als vergrabener Spiegel 34 bezeichnet werden kann, ist bevorzugt als abbildende Teilerschicht 34 bzw. abbildender Spiegel 34 ausgebildet. Im einfachsten Fall ist die Teilerschicht 34 sphärisch geformt. Sie kann jedoch auch asphärisch geformt sein oder als Freiformspiegel ausgebildet sein. Die Abbildungsfunktion der Teilerschicht 34 wird eingesetzt, um die benötigten freien Durchmesser auf der Einkoppelseite zu verringern. Wird auf die Abbildungsfunktion verzichtet, so muss entweder die Divergenz des virtuellen Fokus 35 und/oder der Justagebereich des Fokus eingeschränkt werden oder auf der Einkoppelseite eine bauraumintensivere Optik eingesetzt werden, wie es in der US 9,479,902 B2 gezeigt ist.

Die Teilerschicht 34 ist bevorzugt zum Auge hin bzw. zur Rückseite 12 hin konkav gekrümmt. Der Krümmungsradius liegt bevorzugt in einem Bereich zwischen 25 mm und 200 mm, besonders bevorzugt zwischen 45 mm und 75 mm.

Der Ablenkwinkel des Auskoppelspiegels 34 wird bevorzugt so gewählt werden, dass alle Strahlen im Inneren des Brillenglases 4 durch Totalreflexion geführt werden. Ist der Einfallswinkel der Strahlen im Brillenglas 4 zu klein, so ist keine Totalreflexion mehr möglich. Ist der Einfallswinkel zu groß, so erhöht sich die Sensibilität des Systems auf Fertigungstoleranzen des Brillenglases 4.

Der Einfallswinkel der Strahlen des Brillenglases 4 liegt daher bevorzugt zwischen 45° und 85°, besonders bevorzugt zwischen 60° und 70°. Der Neigungswinkel des Spiegels 41 liegt daher zwischen 22,5° und 42,5°.

Bei hohen Einfallswinkeln im Brillenglas 4 kann das Brillenglas 4 tendenziell dünner gestaltet werden, für geringe Einfallswinkel wird ein dickeres Brillenglas 4 benötigt. Die Dicke des Brillenglases 4 liegt bevorzugt zwischen 1 mm und 10 mm und besonders bevorzugt zwischen 3 mm und 5 mm.

Die augenseitige numerische Apertur liegt bevorzugt im Bereich zwischen 0,02 und 0,2 und besonders bevorzugt im Bereich zwischen 0,05 und 0,15. Der laterale Justagebereich des virtuellen Fokus 35 liegt bevorzugt zwischen ± 0,5 mm und ± 5 mm.

Die im virtuellen Lichtfokus 35 angebotene Energie liegt bevorzugt im Bereich zwischen 1 mW und 200 mW, besonders bevorzugt zwischen 10 mW und 100 mW. Die genaue Dimensionierung kann unter Berücksichtigung des Energiebedarfs des Implantats 2, der biologischen Grenzwerte und der für den Träger sinnvollen Augendrehwinkel erfolgen.

Die Augenpupille des Auges 14 hat vom Brillenglas 4 bevorzugt einen Abstand zwischen 10 mm und 25 mm, besonders bevorzugt einen Abstand zwischen 12 mm und 20 mm.

Der virtuelle Lichtfokus 35 hat von der Augenpupille des Auges 14 bevorzugt einen Abstand zwischen 15 mm und 50 mm, besonders bevorzugt einen Abstand zwischen 20 mm und 30 mm.

Die Anzahl der Totalreflexionen im Inneren des Brillenglases kann variieren, bevorzugt zwischen einer Totalreflexion und zehn Totalreflexionen.

Die Brechzahl des Substrats des Brillenglases 4 ist für die Funktion nicht vordergründig entscheidend, so lange die Bedingungen der Totalreflexion immer noch eingehalten ist. Bevorzugt sind daher transparente Substrate mit einer Brechzahl von größer als 1,4 und besonders bevorzugt von größer als 1,6. Wenn die Lichtführung im Brillenglas 4 nicht durch die innere Totalreflexion sondern aufgrund von reflektiven Schichten, die auf der Vorder- und/oder Rückseite 11, 12 oder von der Vorder- und/oder Rückseite 11, 12 beabstandet vorgesehen sind, ist die Brechzahl bezüglich der Lichtführung frei wählbar.

Das Material des Brillensubstrates kann ein optisches Glas oder ein optischer Kunststoff sein, so lange dessen jeweilige Transmission für die betrachtete Beleuchtungswellenlänge hinreichend groß ist. Wegen des geringen Gewichtes sind Kunststoffe bevorzugt. Mögliche Materialien sind z.B. PMMA, Polycarbonat, Zeonex oder CR39.

Eine bevorzugte Lichtquelle 6 ist eine effiziente Laserquelle. Technisch verfügbare Halbleiterlaserdioden 6 weisen unterschiedliche Divergenzwinkel für unterschiedliche Azimute der aus der Quelle 6 austretenden Strahlung 10 auf. Um diesen Effekt zu kompensieren, kann nach der Laserquelle 6 ein Fast-Axis-Kollimator (nicht gezeigt) eingesetzt werden.

Die Lichtquelle 6 stellt bevorzugt Licht außerhalb des sichtbaren Spektralbereichs zur Verfügung. Besonders bevorzugt schmalbandiges Licht mit einer Halbwertsbreite von kleiner als 50 nm.

Schmalbandiges und polarisiertes Licht erleichtert die Herstellung der vergrabenen, dichroitischen Teilerschicht auf dem Auskoppelspiegel 34, da dessen Effizienz bei Wirkung auf einer breiten Spektral- und Winkelbereich in der Regel sinkt.

Die Lichtquelle 6 gibt bevorzugt, aber nicht zwingend, linear polarisiertes Licht ab. Besonders bevorzugt liegt die lineare Polarisation senkrecht zur Ebene, die die langsame (kurze) Achse der Diode 6 aufspannt. Für diese Polarisation ist ein typischer vergrabener Dichroid besonders effizient. Falls, wie für technisch verfügbare Laserdioden 6 der Fall - die Polarisation senkrecht zu dieser bevorzugten Achse liegt - kann erfindungsgemäß entlang des Strahlenganges eine Verzögerungsplatte oder -folie (λ/2 Platte) eingebracht werden, die die Polarisationsrichtung nach Durchgang durch die Verzögerungsplatte oder -folie dreht. Die Verzögerungsplatte oder - folie wird bevorzugt in den kollimierten Strahl eingebracht, also beispielsweise nach der Kollimationsoptik 8 oder vor der Einkoppelung ins Brillenglas 4.

In Lichtrichtung nach der Quelle 6 befindet sich die Kollimationsoptik 8, die das Licht 10 der Lichtquelle 6 in ein nahezu paralleles Strahlenbündel überführt. Vorteil dieser Konfiguration ist eine gewisse Variabilität der Abstände, so dass das optische System 7 hierüber an unterschiedliche Kopfgrößen der Benutzer angepasst werden kann.

Die Kollimationsoptik 8 kann refraktiv (sphärische oder asphärische Linsen), spiegelnd (abbildende Spiegel) und/oder diffraktive (abbildende, beugende Elemente) ausgebildet sein.

Nach der Kollimationsoptik 8 ist das Umlenkprisma 9 angeordnet, das die kollimierten Strahlen 10 aus dem Brillenbügel in Richtung des Brennglases 4 lenkt. Die Gestaltung des Prismas 9 wird an die gegebene Brillenform angepasst.

Anschließend folgt die Einkoppeloptik bzw. das Einkoppelprisma 32, die das kollimierte Laserlicht 10 in das Brillenglas 4 fokussiert. Die Einkopplung erfolgt in einem passenden Winkel, so dass, wie oben erwähnt, nach einer gewissen Anzahl von Totalreflexionen der Auskoppelspiegel 34 getroffen wird. Die Brennweite der Einkoppeloptik 32 ist so gewählt, dass im Zusammenspiel mit dem abbildenden, vergrabenen Spiegel 34 der Lichtfokus 16 in einem gewünschten Abstand zur Pupille des Auges 14 entsteht. Die Brennweite der Einkoppeloptik 32 liegt bevorzugt im Bereich zwischen 20 mm und 100 mm und besonders bevorzugt zwischen 30 mm und 60 mm.

In Fig. 19 ist eine Abwandlung der in Fig. 18 gezeigten Ausführungsform gezeigt. Bei dieser Abwandlung gemäß Fig. 19 ist im Strahlengang zwischen der Quelle 6 und dem Auge 14 an passender Stelle eine Streuscheibe 37 mit geringem Streuwinkel eingebracht. Bevorzugt ist die Streuscheibe 37 an einer zur Augenpupille konjugierten Ebene positioniert. Die genannten Brennweiten, Brillenglasdicken und Abstände sind erfindungsgemäß so gewählt, dass diese Ebene in geringem Abstand vor dem Umlenkprisma 8 entsteht. Der Abstand kann z.B. 1 mm, 2 mm, 3 mm, 4 mm, 5 mm, 6 mm, 7 mm, 8 mm, 9 mm oder 10 mm betragen.

Bei der Darstellung in Fig. 19 ist die Streuscheibe 37 an der betreffenden Stelle angebracht. Die bezeichneten Strahlen des Strahlenbündels 10 sind mit einer statistischen Richtungsänderung an der Streuscheibe 37 versehen. Es entsteht damit sowohl im Brillenglas 4 als auch virtuell vor dem Auge 14 ein vergrößerter Lichtfleck 16. Das Strahlraster in der Pupillenebene des Auges 14 ist hiervon nicht beeinflusst.

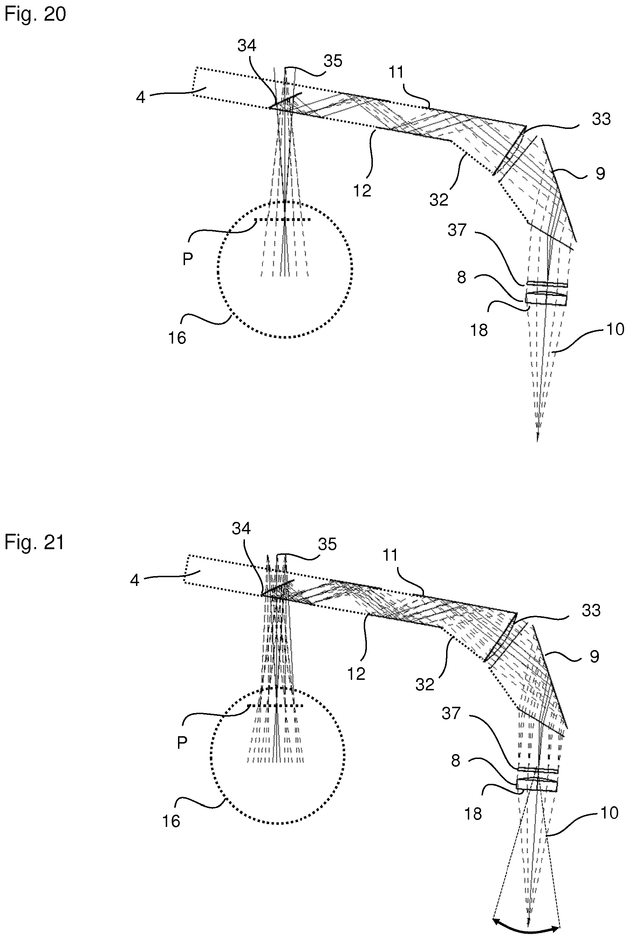

Die Darstellung in Fig. 20 verdeutlicht die Abbildung der Streuscheibe 37 in die Augenpupille. Strahlen, die an der Streuscheibe 37 an einem Punkt starten, werden an der Pupillenebene wieder in einem Punkt vereint. Dies ist beispielhaft für einen Punkt mit durchgezogenen Linien in Fig. 20 eingezeichnet.

In Fig. 21 ist schematisch die möglichste Justage des Systems für verschiedene Einfallswinkel in der Augenpupille gezeigt. Eine mechanische Drehung der Kollimationsoptik 8 samt Laserquelle 6 und Streuscheibe 37 wird in eine virtuelle Drehung der Strahlen in der Pupillenebene übersetzt. Dadurch wird der Einfallswinkel der Strahlen am Auge 14 eingestellt.

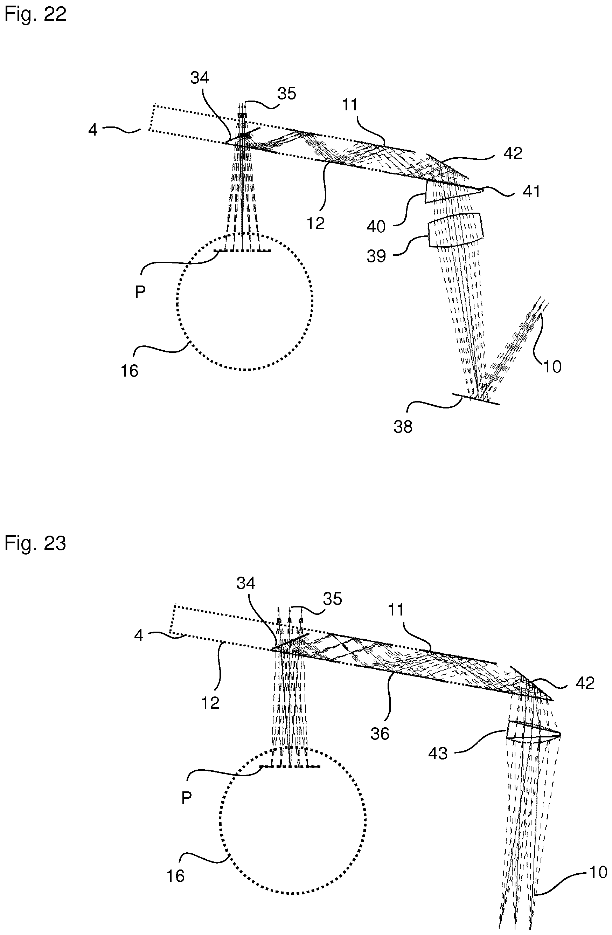

In Fig. 22 ist eine weitere Abbildung gezeigt, bei der die Teilerschicht 34 als plane und somit nicht gekrümmte Schicht ausgebildet ist. Im Unterschied zu den bisher beschriebenen Ausführungsformen, ist der Laserquelle 6, die gegebenenfalls einen Fast-Axis-Kollimator aufweisen kann, ein Umlenkspiegel 38 nachgeordnet. Der Umlenkspiegel 38 kann eine Streufunktion aufweisen und/oder kippbar sein. Dem Umlenkspiegel 38 ist eine Linse 39 mit abbildenden Flächen nachgeordnet. Die abbildenden Flächen können sphärisch, asphärisch sein oder als Freiformflächen ausgebildet sein. Der Linse 39 ist ein Keil 40 nachgeordnet, der durch einen Luftspalt 41 von der Rückseite 12 des Brillenglases 4 beabstandet ist. Die Lichtstrahlen 10 treten über den Luftspalt 41 in das Brillenglas 4 ein und werden von einer an der Vorderseite 11 ausgebildeten Planfläche 42 im Brillenglas so umgelenkt, dass sie durch innere Totalreflexion bis zur Teilerschicht 34 geführt werden.

In Fig. 23 ist eine weitere Abwandlung gezeigt. Die Laserquelle 6 kann wiederum gegebenenfalls einen Fast-Axis-Kollimator aufweisen, wobei bei der Darstellung in Fig. 23 verschiedene Justagezustände eingezeichnet sind. Der Quelle 6 ist eine Linse 43 mit abbildenden Flächen nachgeordnet. Die Flächen können sphärisch oder asphärisch gekrümmt sein oder als Freiformflächen ausgebildet sein. Die Fläche 42 ist hier als abbildender Spiegel ausgebildet, der sphärisch oder asphärisch gekrümmt sein kann oder als Freiformfläche ausgebildet sein kann. Des Weiteren ist ein abbildendes diffraktives Element 36 an der Rückseite 12 so ausgebildet, dass es an dieser Stelle die Totalreflexion ersetzt. Mit dem Element 36 kann die abbildende Wirkung der Teilerschicht 34 ersetzt werden. Damit kann die Teilerschicht 34 z.B. plan ausgebildet werden.

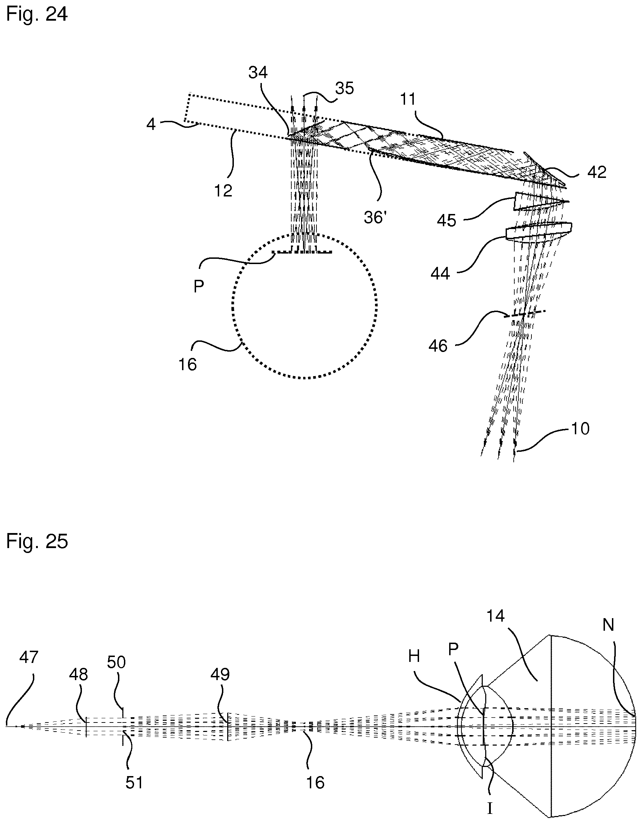

Die in Fig. 24 gezeigte Abwandlung unterscheidet sich von der Ausführungsform gemäß Fig. 23 darin, dass statt der Linse 43 zwei Linsen 44 und 45 angeordnet sind. Die Linse 45 kann eine plane Fläche und eine sphärisch gekrümmte, eine asphärisch gekrümmte oder eine Freiformfläche aufweisen. Die Linse 44 weist bevorzugt zwei gekrümmte Flächen auf, die wiederum sphärisch, asphärisch gekrümmt sein können oder als Freiformfläche ausgebildet sein können. Zwischen der Laserquelle 6 und der Linse 44 kann eine Streuscheibe 46 positioniert sein. Die Streuscheibe 46 kann drehbar angeordnet sein. Dies kann zur Justage genutzt werden. Ferner ist im Unterschied zur Ausführungsform von Fig. 23 kein abbildendes diffraktives Element 36 vorgesehen, sondern ein gekrümmter Spiegel 36'. Der gekrümmte Spiegel 36' kann auf der Rückseite ausgebildet oder zumindest teilweise im Brillenglas 4 vergraben sein. Ferner kann er dichroitisch beschichtet und/oder als Freiformspiegel 36' ausgebildet sein. Der gekrümmte Spiegel 36' kann die abbildende Wirkung der Teilerschicht 34 ersetzt. Damit kann die Teilerschicht 34 z.B. plan ausgebildet werden.

Die in Verbindung mit Fig. 21 bis 24 beschriebene Möglichkeit der Justage kann auch dazu genutzt werden, einen virtuellen Fokus 35 mit einer lateralen Ausdehnung von mindestens 0,1 mm oder mindestens 1,0 mm zu erzeugen. Dazu muss lediglich eine ausgedehnte Lichtquelle, die den Justagebereich abdeckt, oder ein optisches Element mit streuender Eigenschaft (wie z.B. eine Streuscheibe, ein Hologramm und /oder ein Volumenhologramm), das den Justagebereich abdeckt, im Bereich der eingezeichneten Startpunkte der Strahlenbündel 10 angeordnet werden. Somit werden alle angedeuteten oder eingezeichneten Strahlenbündel 10 gleichzeitig erzeugt, wodurch sich der lateral ausgedehnte virtuelle Fokus 35 ergibt.

Eine weitere Ausführungsform der Beleuchtungsvorrichtung 1 zur Erzeugung einer quasi ausgedehnten Lichtquelle bzw eines Fokus 16 mit einer lateralen Ausdehnung von mindestens 0,1 mm ist schematisch in Fig. 25 gezeigt. Dabei befindet sich eine Punktquelle 47 im vorderen Brennpunkt einer ersten Linse 48. Dadurch wird das von der Punktquelle 47 abgegebene Strahlenbündel 10 kollimiert und durch eine der ersten Linse 48 nachgeordneten zweiten Linse 49 zu einem Fokus 16 vor dem Auge 14 gebracht. Zwischen der ersten und zweiten Linse 48, 49 befindet sich eine Blende 50, deren Abstand zur zweiten Linse 49 so gewählt ist, dass die Blende 50 auf die Iris I des Auges 14 abgebildet wird. In der Blendenebene ist eine Streuscheibe 51 eingebracht, so dass der Fokus 16 vor dem Auge 14 entsprechend der Divergenz der Streuscheibe 51 lateral (also quer zur Ausbreitungsrichtung) vergrößert ist. Durch die Abbildung der Streuscheibe 51 in die Augenpupille P wird aber kein Licht an der Iris I beschnitten. Die laterale Ausdehnung des Fokus 16 ist bevorzugt so, dass sie mindestens 0,1 mm beträgt. Insbesondere kann die laterale Ausdehnung des Fokus 16 einen Durchmesser D aufweisen, wobei bevorzugt $0,1 \text{ mm} \leq D \leq 15 \text{ mm}$, insbesondere $1 \text{ mm} \leq D \leq 15 \text{ mm}$ und besonders bevorzugt $2 \text{ mm} \leq D \leq 10 \text{ mm}$ ist. Falls der Fokus 16 nicht kreisförmig ist, beschreibt der Durchmesser D den Durchmesser des kleinsten Kreises, in dem der Fokus 16 vollständig enthalten ist.

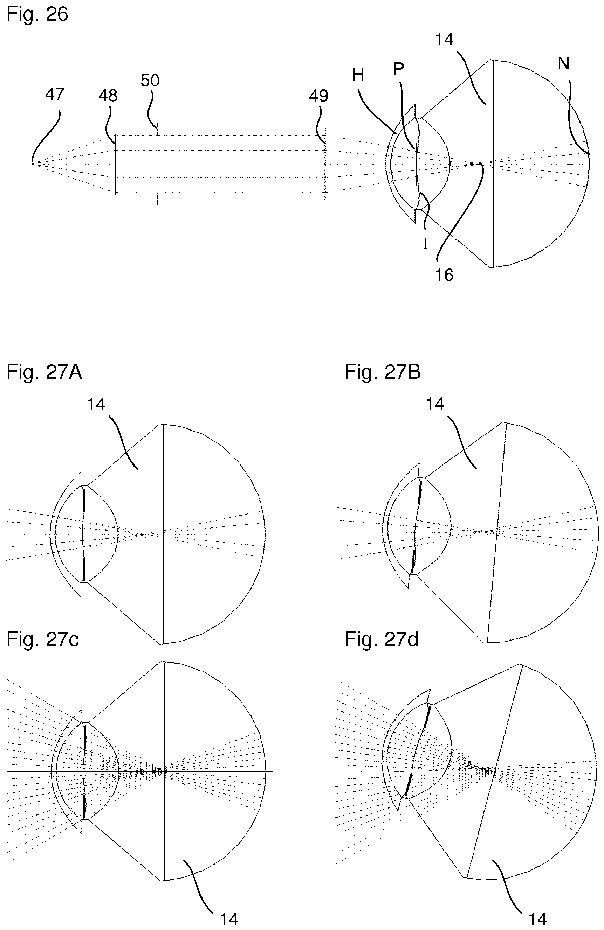

In Fig. 26 ist eine weitere Ausführungsform der Beleuchtungsvorrichtung 1 gezeigt. Der Aufbau entspricht im Wesentlichen dem Aufbau gemäß der Ausführungsform von Fig. 25. Es wird lediglich die Streuscheibe 51 weggelassen und die Beleuchtungsvorrichtung 1 ist so zum Auge 14 des Benutzers positioniert, dass der Fokus 16 der Punktquelle 47 in den Drehpunkt des Auges 14 abgebildet wird. Natürlich sind auch geringe Abweichungen möglich. So ist es beispielsweise möglich, dass der Fokus 16 in einem Bereich entlang der Ausbreitungsrichtung um den Drehpunkt 15 liegt, der $\pm 1 \text{ mm}$, $\pm 2 \text{ mm}$, $\pm 3 \text{ mm}$, $\pm 4 \text{ mm}$ oder $\pm 5 \text{ mm}$ beträgt.

Bei dieser Ausführungsform bestimmt die Divergenz bzw. die numerische Apertur der abgebildeten Punktquelle 47 den maximalen Drehwinkel des Auges 14, bei dem noch Licht durch die Iris I auf die Netzhaut N gelangt. Die auf der Netzhaut N beleuchtete Fläche ist durch die Größe der Augenpupille P begrenzt. Die beschriebene Ausführungsform ist besonders bevorzugt, wenn sich das zu beleuchtende Implantat 2 auf der Netzhaut befindet, ein großer Augendrehwinkelbereich abgedeckt werden soll und das Implantat 2 selbst eine eher geringe laterale Ausdehnung besitzt.

In Fig. 27A, 27B, 27C und 27D sind verschiedene Drehstellungen des Auges 14 gezeigt. Aus den Darstellungen ergibt sich, dass auch bei großen Verdrehungen des Auges 14 immer eine ähnlich große Fläche auf der Netzhaut N beleuchtet wird. Die gepunkteten Strahlen zeigen dabei die Ausbreitung des Strahlenbündels ohne Anwesenheit des Auges 14 (und somit in Luft) an. Sie schneiden sich im Drehpunkt des Auges 14. Die gestrichelten Strahlen berücksichtigen die Brechung an Hornhaut H und Augenlinse L des Auges. Deren Fokus liegt also leicht abseits des tatsächlichen, mechanischen Drehpunktes 15 des Auges 14. Bei der Ausführungsform gemäß Fig. 26 ist die beleuchtete Fläche auf der Netzhaut N durch den Pupillendurchmesser des Auges 14 begrenzt. Ab einer bestimmten Größe des Implantates 2 kann dieses dann nicht mehr vollständig beleuchtet werden.

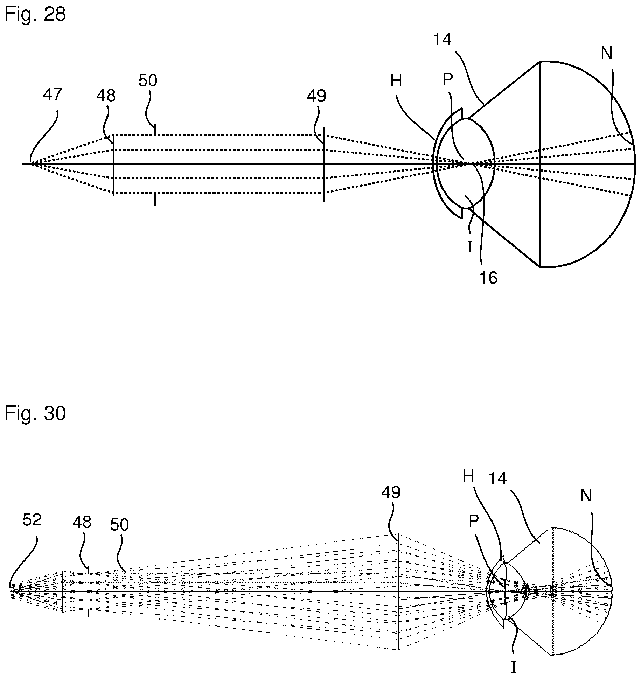

Man kann daher die Beleuchtungseinrichtung 1 auch so ausbilden, dass die Punktquelle 47 in die Ebene der Augenpupille P (oder in einen Bereich entlang der Ausbreitungsrichtung des Strahlenbündels 10 von $\pm 1$ mm, $\pm 2$ mm, $\pm 3$ mm, $\pm 4$ mm oder $\pm 5$ mm) abgebildet wird. Die Divergenz der Punktquelle 47 bzw. die numerische Apertur der Abbildung bestimmt dann allein die auf der Netzhaut N ausgeleuchtete Fläche. Dadurch lassen sich auch sehr große Netzhautimplantate 2 ausleuchten. Diese Konfiguration ist außerdem etwas robuster gegen einen lateralen Versatz des Auges 14. Dieser verändert die auf der Netzhaut N ausgeleuchtete Fläche nicht, solange er kleiner als der halbe Pupillendurchmesser der Iris I des Auges 14 ist. Der Aufbau einer solchen Beleuchtungsvorrichtung 1 ist schematisch in Fig. 28 gezeigt.

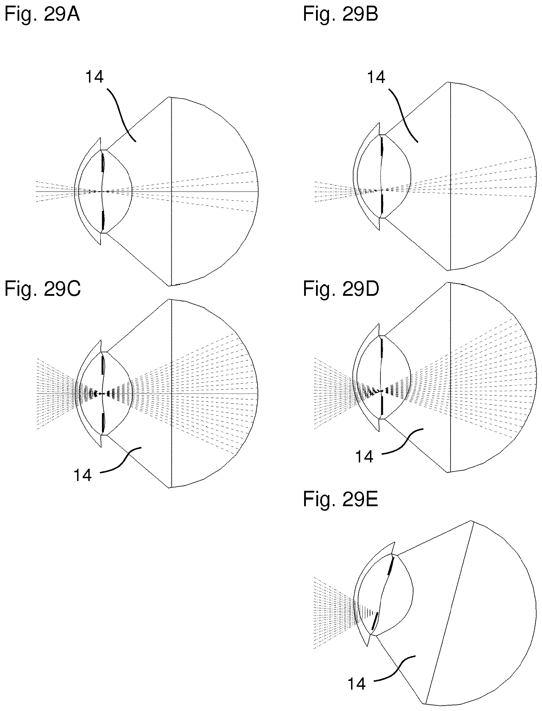

Bei einer Verdrehung des Auges 14 kommt es hingegen schnell zu einer Abschattung an der Iris I, insbesondere wenn diese sehr klein ist. Daher ist die beschriebene Ausführungsform besonders bevorzugt, wenn sich das zu beleuchtende Implantat 2 auf der Netzhaut N befindet, zum Betrieb des Implantats 2 eine sehr große Fläche auf der Netzhaut N ausgeleuchtet werden muss, nur geringfügige laterale Verschiebungen des Auges 14 während des Betriebs erwartet werden und die zu erwartenden Augenverdrehungen während des Betriebs ebenfalls eher klein sind. In Fig. 29A, 29B, 29C und 29D sind verschiedene laterale Positionen des Auges 14 (in Fig. 29D zusätzlich noch eine unterschiedliche Drehstellung) bei der Variante der Abbildung der Punktquelle in die Ebene der Augenpupille P gezeigt. Aus diesen Darstellungen kann entnommen werden, dass die Größe der auf der Netzhaut N ausgeleuchteten Fläche nicht durch die Augenpupille P begrenzt ist.

In Fig. 30 ist schematisch eine Ausführungsform der Beleuchtungseinrichtung 1 gezeigt, bei der die Strahlenbündel 10 einer ausgedehnten Quelle 52 auf eine gekrümmte Fläche innerhalb des Auges 14 abgebildet wird. Die gekrümmte Fläche kann beispielsweise eine sphärische Fläche sein. Dazu sind der ausgedehnten Lichtquelle 52 die erste und zweite Linse 48 und 49 nachgeordnet, deren Abstände zur Lichtquelle 52 und zum Auge 14 sowie untereinander so gewählt ist, dass die gewünschte Abbildung erzeugt wird. Des Weiteren ist zwischen den beiden Linsen 48 und 49 die Blende 50 angeordnet, wobei die Blende 50 als variable Blende ausgebildet sein kann. Dadurch kann die Divergenz der Quelle 52 und die Größe der ausgeleuchteten Fläche auf der Netzhaut gezielt eingestellt werden.

Die Abbildung der ausgedehnten Quelle 52 auf die gekrümmte Fläche kann in einer von der Erfindung nicht abgedeckten Ausführungsform so durchgeführt werden, dass sich der axiale Fokus, d.h. das Bild eines ausgewählten Punktes der Quelle 52, in der Pupillenebene des Auges 14 befindet. Der Krümmungsmittelpunkt der gekrümmten Bildfläche, auf die die ausgedehnte Quelle 52 abgebildet wird, kann sich im Drehpunkt des Auges14 befinden. Durch eine solche Ausbildung kann die lokale Leistungsdichte im Auge reduziert werden im Vergleich zu den Ausführungsformen gemäß Fig. 25 bis 29.

Die auf der Netzhaut ausgeleuchtete Fläche ist weiterhin durch die Divergenz der Quelle 52, d.h. die numerische Apertur der Abbildung, bestimmt, und daher nicht durch die Pupillengröße begrenzt. Durch die erfindungsgemäße Krümmung und Orientierung der Bildfläche im Auge 14 ändert sich die Ausrichtung der Netzhaut N nicht bei Verdrehung des Auges, solange die Ausdehnung des Bildes der Quelle 52 selbst hinreichend groß ist. Die Energie verteilt sich nunmehr auf eine große Fläche, d.h. die Bestrahlungsstärke sinkt drastisch im Vergleich zu den Ausführungsformen gemäß Fig. 25 bis 29. Wegen der ausgedehnten Quelle 52 ist das System auch etwas robuster gegenüber lateralem Augenversatz.

Diese Ausführungsform ist besonders bevorzugt, wenn sich das zu beleuchtende Implantat 2 auf der Netzhaut befindet, zum Betrieb des Implantats 2 eine große Fläche auf der Netzhaut N ausgeleuchtet werden muss, die zu erwartenden Augenverdrehungen während des Betriebs ebenfalls groß sind, aufgrund der benötigten Gesamtleistung die biologisch relevanten Grenzwerte der Bestrahlungsstärke bei der Verwendung wenig ausgedehnter Punktquellen überschritten werden und laterale Augenverschiebungen während des Betriebs eher gering bzw. moderat ausfallen.

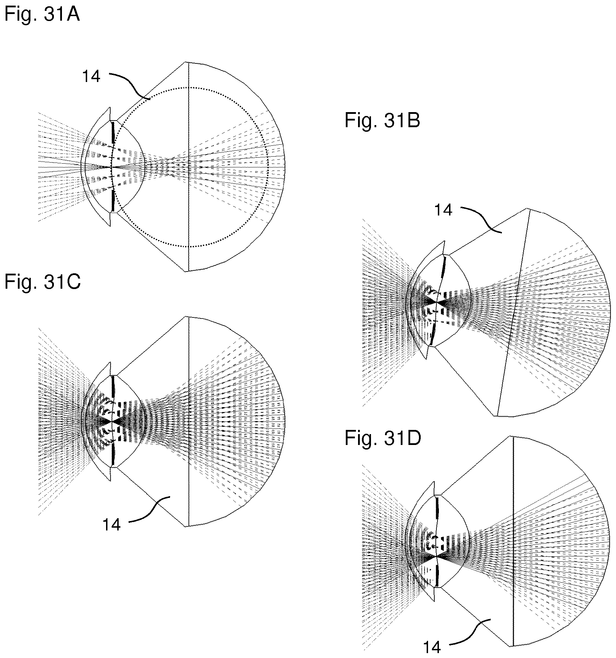

In Fig. 31 A bis 31 D sind verschiedene Stellungen (laterale Positionen und Drehstellungen) des Auges bei der beschriebenen Beleuchtung gezeigt.

In Fig. 32 ist eine Abwandlung der Ausführungsform von Fig. 26 dargestellt, bei der keine Punktlichtquelle 47 sondern die ausgedehnte Lichtquelle 52 eingesetzt wird, so dass diese in den Drehpunkt des Auges 14 abgebildet wird. Es liegt somit eine telezentrische Beleuchtung des Drehpunktes vor, so dass die Hauptstrahlen in der Abbildung annähernd parallel sind.

Dadurch wird gewährleistet, dass sich die dem Auge 14 angebotene Lichtverteilung nicht verändert, wenn das Auge 14 lateral zur Lichtquelle 52 verschoben wird. Wegen der Abbildung in den Drehpunkt 15 des Auges 14 ist weiterhin eine Beleuchtung auch bei hohen Drehwinkeln des Auges 14 möglich. Aufgrund der ausgedehnten Lichtquelle 52 kann die Bestrahlungsstärke gering ausfallen.

Diese Ausführungsform ist besonders bevorzugt, wenn sich das zu beleuchtende Implantat 2 auf der Netzhaut befindet, wobei ein großer Augendrehwinkelbereich abgedeckt werden soll, das Implantat selbst eher eine geringe laterale Ausdehnung besitzt und aufgrund der benötigten Gesamtleistung die biologisch relevanten Grenzwerte der Bestrahlungsstärke bei Verwendung wenig ausgedehnter Punktquellen überschritten werden.

Die Quelle 52 befindet sich im vorderen Brennpunkt der ersten Linse 48 und der Drehpunkt 50 des Auges 14 befindet sich im hinteren Brennpunkt der zweiten Linse 49. Die Quelle 52 wird somit in den Drehpunkt 15 abgebildet. Eine Telezentrieblende 50 befindet sich ferner im vorderen Brennpunkt der zweiten Linse 49, so dass die zur Abbildung verwendeten Hauptstrahlen parallel auf das Auge 14 treffen.

In Fig. 33A-D ist diese Beleuchtung für verschiedene Stellungen des Auges 14 schematisch dargestellt.

In Fig. 34 ist eine von der Erfindung nicht abgedeckte Abwandlung der Ausführungsform gemäß Fig. 32 gezeigt. Die Abstände sind so gewählt, dass der Fokus 16 in der Pupillenebene P des Auges 14 liegt. Es wird somit eine telezentrische Abbildung einer ausgedehnten Quelle 52 in die Pupillenebene des Auges 14 realisiert, wodurch die Beleuchtung robust gegenüber lateralen Verschiebungen des Auges 14 ist. Auch ist die auf der Netzhaut N beleuchtete Fläche nicht mehr durch die Iris des Auges 14 limitiert. Vielmehr lässt sich die Größe dieser Fläche durch die verwendete Divergenz bzw. numerische Apertur der Abbildung gezielt einstellen. So kann beispielsweise ein unnötiges Überstrahlen des Implantates 2 auf der Netzhaut vermieden werden.

Diese Ausführungsform ist besonders bevorzugt, wenn sich das zu beleuchtende Implantat 2 auf der Netzhaut befindet, zum Betrieb des Implantats 2 eine sehr große Fläche auf der Netzhaut ausgeleuchtet werden muss, während des Betriebs sehr große laterale Verschiebungen des Auges zu erwarten sind, die zu erwartenden Augenverdrehungen während des Betriebs moderat sind, aufgrund der benötigten Gesamtleistung die biologisch relevanten Grenzwerte der Bestrahlungsstärke bei der Verwendung wenig ausgedehnter Punktquellen überschritten werden und das Energiebudget eine möglichst scharf begrenzte Energieverteilung auf der Netzhaut mit wenig Überstrahlung erfordert.

In Fig. 35A-C sind verschiedene Stellungen (laterale Positionen und Drehstellungen) des Auges bei dieser telezentrischen Abbildung der ausgedehnten Quelle in die Pupillenebene des Auges gezeigt.

Ferner kann die Beleuchtungsvorrichtung so ausgebildet sein, dass eine nicht-telezentrische Abbildung einer ausgedehnten Quelle in den Drehpunkt 15 des Auges 14 erfolgt. Dies kann z.B. dadurch erreicht werden, dass die im Beleuchtungssystem vorhandene Blende 50 nicht nach unendlich abgebildet wird. Dies ist insbesondere dann vorteilhaft, wenn die Beleuchtung durch ein auf dem Kopf getragenes optisches System mit geringem Bauraum, beispielsweise in Form einer Brille, erreicht werden soll. Die Blende des Beleuchtungssystems kann dann direkt im Brillensubstrat liegen, was den für die Brille benötigten Brillenquerschnitt trotz des großen abdeckbaren Augendrehwinkelbereichs minimiert.

Eine solche Ausführungsform ist besonders bevorzugt, wenn sich das zu beleuchtende Implantat 2 auf der Netzhaut befindet, hierbei ein großer Augendrehwinkelbereich abgedeckt werden soll, das Implantat 2 selbst aber eher eine geringe laterale Ausdehnung besitzt, aufgrund der benötigten Gesamtleistung die biologisch relevanten Grenzwerte der Bestrahlungsstärke bei der Verwendung wenig ausgebildeter Punktquellen überschritten werden und die zu erwartenden lateralen Verschiebungen des Auges 14 während des Betriebs eher moderat sind und der Bauraum des optischen Systems zur Beleuchtung möglichst kompakt sein soll.

In Fig. 36A-C sind verschiedene Stellungen des Auges bei einer solchen Beleuchtung gezeigt.

Die beschriebenen Ausführungsformen der Beleuchtungsvorrichtung 1 können, wie bereits beschrieben, als auf dem Kopf des Benutzers tragbar ausgebildet sein. Insbesondere können sie in Form einer Brille ausgebildet sein. Natürlich kann die Lichtquelle 6 nicht nur am rechten Brillenbügel, wie in Fig. 1 gezeigt ist, sondern alternativ oder zusätzlich am linken Brillenbügel ausgebildet sein. In diesem Fall erfolgt die Beleuchtung mit Beleuchtungsstrahlung der Lichtquelle am linken Brillenbügel bevorzugt über das zweite Brillenglas 5, das in entsprechender Weise wie das erste Brillenglas 4 ausgebildet sein kann (bevorzugt gespiegelt zum ersten Brillenglas).

Es ist jedoch auch möglich, dass die Beleuchtungsvorrichtung 1 als separates Gerät ausgebildet ist (Fig. 37), vor das sich der Benutzer z.B. hinsetzt und dann auf die Beleuchtungsoptik 7 blickt. Dies kann z.B. dadurch realisiert werden, dass ein zu betrachtender Zielpunkt dargestellt wird. Ferner kann alternativ oder zusätzlich eine Anlage 3 (z.B. eine Kopfanlage) an dem Gerät oder in einem festgelegten Abstand vom Gerät ausgebildet sein, wie dies bei Untersuchungsgeräten beim Augenarzt üblich ist.

Die erfindungsgemäße Beleuchtungsvorrichtung wurde bisher stets im Zusammenhang mit der Energieversorgung des Augenimplantates 2 beschrieben. Es ist jedoch auch möglich, mit der Beleuchtungsvorrichtung alternativ oder zusätzlich eine Kommunikation mit dem Augenimplantat 2 durchzuführen. Dazu wird das Strahlenbündel 10 beispielsweise moduliert (es kann z.B. eine Intensitätsmodulation und/oder eine Frequenzmodulation durchgeführt werden). Somit ist es möglich, Daten zum Augenimplantat 2 zu übertragen. In einer Weiterbildung ist auch eine bidirektionale Kommunikation zwischen der Beleuchtungsvorrichtung 1 und dem Augenimplantat 2 möglich.

## Patentansprüche

1. Vorrichtung zur Energieversorgung von und/oder Kommunikation mit einem Augenimplantat mittels Beleuchtungsstrahlung, wobei die Vorrichtung (1)

   eine Quelle (6), die die Beleuchtungsstrahlung (10) abgibt,
   eine Positioniereinheit (3), die eine Beleuchtungsposition des Auges eines Benutzers festlegt,
   eine Beleuchtungsoptik (7), und
   eine optische Eingangsschnittstelle, über die die Beleuchtungsstrahlung (10) der Beleuchtungsoptik (7) zuführbar ist, aufweist,
   wobei die Beleuchtungsoptik (7) die zugeführte Beleuchtungsstrahlung (10) so fokussiert, dass, wenn das Auge des Benutzers in der festgelegten Beleuchtungsposition ist, die Beleuchtungsstrahlung (10) als konvergentes Strahlenbündel in das Auge (14) eintritt, so dass der Fokus (16) innerhalb des Auges (14) liegt,
   **dadurch gekennzeichnet, dass**
   der Fokus, wenn das Auge des Benutzers in der festgelegten Beleuchtungsposition ist, in Ausbreitungsrichtung der Beleuchtungsstrahlung (10) in einem Bereich von $\pm$ 5 mm um den Drehpunkt (15) des Auges liegt, und
   die Beleuchtungsoptik (7) die zugeführte Beleuchtungsstrahlung (10) so fokussiert, dass ein Fokus (16) mit einer lateralen Ausdehnung von mindestens 0,5 mm in Luft vorliegt.

2. Vorrichtung nach Anspruch 1, bei der die Beleuchtungsoptik (7) ein Optikelement mit streuender Wirkung zur Erzeugung der lateralen Ausdehnung des Fokus (16) aufweist.

3. Vorrichtung nach einem der obigen Ansprüche, bei der die Beleuchtungsoptik die Beleuchtungsstrahlung so abbildet, dass der Fokus auf einer gekrümmten Fläche liegt.

4. Vorrichtung nach einem der Ansprüche 1 bis 3, bei der die Beleuchtungsoptik (7) so ausgebildet ist, dass sie eine nicht-telezentrische Abbildung der Beleuchtungsstrahlung in den Drehpunkt des Auges, wenn das Auge des Benutzers in der festgelegten Beleuchtungsposition ist, durchführt.

**5.** Vorrichtung nach einem der Ansprüche 1 bis 3, bei der
die Beleuchtungsoptik (7) so ausgebildet ist, dass sie eine telezentrische Abbildung der Beleuchtungsstrahlen so durchführt, dass, wenn das Auge des Benutzers in einer festgelegten Beleuchtungsposition ist, der Fokus im Drehpunkt des Auges liegt.

**6.** Vorrichtung nach einem der obigen Ansprüche, bei der
die Positioniereinheit (3) als auf den Kopf des Benutzers aufsetzbare Einheit ausgebildet ist.

## Claims

**1.** An apparatus for supplying energy to and/or communicating with an ocular implant by means of illumination radiation, wherein the apparatus (1) comprises

a source (6) emitting the illumination radiation (10),
a positioning unit (3), which defines an illumination position of the eye of a user, an illumination optics (7) and
an optical input interface, via which the illumination radiation (10) can be supplied to the illumination optics (7),
wherein the illumination optics (7) focusses the supplied illumination radiation (10) such that, when the user's eye is in the defined illumination position, the illumination radiation (10) enters the eye (14) as a convergent beam so that the focus (16) lies within the eye (14),
**characterized in that**
the focus lies in a region of + 5 mm around the center of rotation (15) in the propagation direction of the illumination radiation (10) when the user's eye is in the defined illumination position, and
the illumination optics (7) focusses the supplied illumination radiation (10) in such a way that a focus (16) with a lateral extension of at least 0.5 mm in air is present.

**2.** The apparatus as claimed in claim 1, wherein the illumination optics (7) comprises an optical element with a scattering effect for producing the lateral extension of the focus (16).

**3.** The apparatus as claimed in any one of the preceding claims, wherein the illumination optics images the illumination radiation in such a way that the focus lies on a curved surface.

**4.** The apparatus as claimed in any one of claims 1 to 3, wherein the illumination optics (7) is embodied in such a way that it carries out non-telecentric imaging of the illumination radiation into the center of rotation of the eye when the user's eye is in the defined illumination position.

**5.** The apparatus as claimed in any one of claims 1 to 3, wherein the illumination optics (7) is embodied in such a way that it carries out telecentric imaging of the illumination radiation beams in such a way that, when the user's eye is in the defined illumination position, the focus lies in the center of rotation of the eye.

**6.** The apparatus as claimed in any one of the preceding claims, wherein the positioning unit (3) is embodied as a unit that can be placed on the head of the user.

## Revendications

**1.** Dispositif pour l'approvisionnement énergétique et/ou la communication avec un implant oculaire au moyen d'un rayonnement d'éclairage, dans lequel le dispositif (1) une source (6) qui émet le rayonnement d'éclairage (10),

une unité de positionnement (3) qui détermine une position d'éclairage de l'œil d'un utilisateur, une optique d'éclairage (7), et
une interface d'entrée optique, par laquelle le rayonnement d'éclairage (10) peut être amené à l'optique d'éclairage (7),
l'optique d'éclairage (7) focalise le rayonnement d'éclairage (10) fourni de telle sorte que, lorsque l'œil de l'utilisateur se trouve dans la position d'éclairage déterminée, le rayonnement d'éclairage (10) entre dans l'œil (14) sous la forme d'un faisceau de rayons convergent, de sorte que le foyer (16) se trouve à l'intérieur de l'œil (14),
**caractérisé en ce que**
le foyer, lorsque l'œil de l'utilisateur est dans la position d'éclairage définie, est situé dans la direction de propagation du rayonnement d'éclairage (10) dans une plage de ± 5 mm autour du point de rotation (15) de l'œil, et
l'optique d'éclairage (7) focalise le rayonnement d'éclairage (10) fourni de telle sorte qu'il existe un foyer (16) ayant une extension latérale d'au moins 0,5 mm dans l'air.

**2.** Dispositif selon la revendication 1, dans lequel l'optique d'éclairage (7) comporte un élément optique à effet diffusant pour générer l'extension latérale du foyer (16).

3. Dispositif selon l'une des revendications ci-dessus, dans lequel
l'optique d'éclairage reproduit le rayonnement d'éclairage de manière à ce que le foyer soit situé sur une surface courbe.

4. Dispositif selon l'une quelconque des revendications 1 à 3, dans lequel
l'optique d'éclairage (7) est configurée pour réaliser une imagerie non télécentrique du rayonnement d'éclairage au niveau du centre de rotation de l'œil lorsque l'œil de l'utilisateur est dans la position d'éclairage déterminée.

5. Dispositif selon l'une quelconque des revendications 1 à 3, dans lequel
l'optique d'éclairage (7) est configurée pour réaliser une imagerie télécentrique des rayonnements d'éclairage de telle sorte que, lorsque l'œil de l'utilisateur est dans une position d'éclairage déterminée, le foyer est situé au niveau du centre de rotation de l'œil.

6. Dispositif selon l'une des revendications ci-dessus, dans lequel
l'unité de positionnement (3) est conçue comme une unité pouvant être placée sur la tête de l'utilisateur.

Fig. 1

Fig. 2

Fig. 3

Fig. 4

Fig. 5

13

11

4

12

9

8

18

16

10

Fig. 6

11

4

13

9

8

18

16

10

Fig. 7

Fig. 8

Fig. 9A

Fig. 9B

Fig. 10A

Fig. 10B

Fig. 11

Fig. 12

Fig. 13

Fig. 14

Fig. 15

10

8

Fig. 16

10

8

29

Fig. 17

10

8

30

31

29

Fig. 18

Fig. 19

Fig. 20

Fig. 21

Fig. 22

Fig. 23

Fig. 24

Fig. 25

Fig. 26

Fig. 27A

Fig. 27B

Fig. 27c

Fig. 27d

Fig. 28

Fig. 30

Fig. 29A

14

Fig. 29B

14

Fig. 29C

14

Fig. 29D

14

Fig. 29E

14

Fig. 31A

Fig. 31B

Fig. 31C

Fig. 31D

Fig. 32

Fig. 33A

Fig. 33B

Fig. 33C

Fig. 33D

Fig. 34

Fig. 35B

Fig. 35A

Fig. 35C

Fig. 36A

14

Fig. 36B

Fig. 36C

14

14

Fig. 37

3

14

1

**EP 3 607 392 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015101932 A2
- WO 2005026786 A2
- WO 2017144421 A1
- US 9474902 B2
- US 9479902 B2